# EUROPÄISCHE PATENTSCHRIFT

(11) **EP 0 752 968 B1**
(45) Veröffentlichungstag und Bekanntmachung des Hinweises auf die Patenterteilung: **16.07.1997**
(21) Anmeldenummer: 95916626.5
(22) Anmeldetag: 11.04.1995
(51) Int. Cl.: B65G 9/00, B61B 10/02, B61B 3/00, E01B 25/24

(54) **HÄNGEFÖRDERANLAGE**
SUSPENSION CONVEYOR SYSTEM
INSTALLATION DE TRANSPORT SUSPENDUE

(30) Priorität: 12.04.1994 DE 9406060 U; 24.05.1994 DE 9408513 U
(43) Veröffentlichungstag der Anmeldung: 15.01.1997
(73) Patentinhaber: MTS MODULARE TRANSPORT SYSTEME GMBH, 6130 Vomp (AT)
(72) Erfinder: ENDERLEIN, Robby, D-86899 Landsberg am Lech (DE); ROBU, Johann, D-82140 Olching (DE); GEIGER, Hansjörg, A-6130 Schwaz (AT)
(74) Vertreter: Viering, Jentschura & Partner
(86) Internationale Anmeldenummer: EP9501323
(87) Internationale Veröffentlichungsnummer: WO9527669

(56) Entgegenhaltungen:
- BE-A- 666 500
- FR-A- 2 205 026
- FR-A- 2 315 461
- GB-A- 1 440 709
- GB-A- 2 120 617

## Beschreibung

Die Erfindung betrifft eine Hängeförderanlage nach dem Oberbegriff des Patentanspruchs 1.

Ein derartiger Hängeförderer für den händischen Betrieb nach dem Oberbegriff des Patentanspruchs 1 ist beispielsweise aus der GB 2 120 617 bekannt. Diese Druckschrift lehrt zwei steife, selbsttragende Laufprofile, zwischen welchen ein Führungsschlitz ausgebildet ist. Der Rollapparat dieses Hängeförderers ist überdies mit Seitenführungsrollen und einem unteren Stabilisierungs-Gleitstück versehen, welches auch drehbar angebracht sein kann.

Hängeförderer mit einem Schienensystem und darauf laufenden, einzelnen Rollapparaten sind seit langem bekannt und werden für das Fördern sehr unterschiedlich großer Lasten verwendet, wobei die Konstruktion der jeweiligen Hängeförderanlagen in starkem Maße von der zu fördernden Last abhängen kann. In der Textilindustrie werden Hängeförderanlagen häufig verwendet, um Garnrollen, genähte Bekleidungsstücke, oder ähnliche Werkstücke mit relativ niedrigem Gewicht zu fördern. Dabei sind die Hängeförderanlagen häufig so ausgelegt, daß einerseits der manuelle Betrieb erfolgen kann, das heißt, einzelne, auf den Schienen laufende Rollapparate mit dem gegebenenfalls daran hängenden Gut von Hand weitergeschoben werden können, oder ein automatischer Betrieb erfolgen kann, bei welchem ein Mitnehmer die entsprechenden Rollapparate automatisch weiterfördert.

Herkömmlicherweise wurden als Schienen Spezial-Profilträger verwendet, welche durch Verschweißen einzelner Profilträger miteinander oder durch Strangpressen hergestellt sind. Derartige Konstruktionen haben jedoch den Nachteil, daß aufwendige Spezial-Profilträger hergestellt werden müssen und die gesamte Konstruktion somit nicht mittels herkömmlicher Profile zusammengestellt werden kann. Darüberhinaus lassen sich derartige Spezial-Profilträger nicht in geeignetem Maße baukastenartig miteinander kombinieren, so daß zahlreiche Spezialteile erforderlich sind, um ein beliebig gestaltetes Schienensystem zusammenstellen zu können. Auch müssen die Spezial-Profilträger relativ groß und schwer dimensioniert werden, um die gewünschte Steifigkeit des Schienensystems realisieren zu können.

Die aus dem Stand der Technik bekannten Rollapparate können mittels eines entlang der Laufschienen des Schienensystems verlaufenden angetriebenen Fördermittels mitgenommen werden, welches mit dem Rollapparat kuppelbare Mitnehmer aufweist, wobei der Rollapparat ein Fahrgestell mit wenigstens einer daran drehbar gelagerten zylindrischen Tragrolle zum Abrollen auf den ebenen Laufflächen des Schienensystems aufweist und mit einem Lastaufnahmemittel, insbesondere einem Lasthaken, am unteren Ende des Fahrgestells versehen ist.

Bei der Hängeförderanlage handelt es sich insbesondere um eine Sortieranlage von an jeweils einem der Lastaufnahmemittel hängenden Gegenständen, die durch das Sortieren in eine vorbestimmte Reihenfolge gebracht oder zu Gruppen mit vorbestimmter Reihenfolge zusammengestellt werden sollen. Eine solche Hängeförder- und Sortieranlage, für welche erfindungsgemäße Rollapparate bestimmt sind, ist insbesondere eine Anlage zum automatischen Sortieren von Kleidungsstücken, die an Kleiderbügeln hängen, die ihrerseits an dem Lastaufnahmemittel des jeweiligen Rollapparates hängen, und zum Zusammenstellen solcher Kleidungsstücke zu Gruppen.

Es ist eine Aufgabe der Erfindung, die Hängeförderanlage der eingangs erwähnten Art so auszubilden, daß ein stabiles Rollen des Rollapparats auf dem Schienensystem auch bei hoher Geschwindigkeit und während des Ablenkens des Apparats an Weichen des Schienensystems möglich ist, dabei Führungsflächen vorhanden sind, an denen die Weichen des Schienensystems angreifen können, ohne daß die Weichen von der geförderten Last oder dem Gewicht des Rollapparates beansprucht werden, und ein positives Mitnehmen des Rollapparats mithilfe von an dem angetriebenen Fördermittel wie eine umlaufende Rollenkette, angeordneten Mitnehmern erzielt werden kann.

Durch die Erfindung wird weiter die Aufgabe gelöst, eine Hängeförderanlage der eingangs erwähnten Art zu schaffen, bei welcher Schienenabschnitte mit einem Tragprofilträger und einem Laufprofilträger im Baukastenprinzip mit großer Gestaltungsfreiheit zu einem stabilen Schienensystem zusammengefügt werden können.

Dies wird erfindungsgemäß durch die Merkmale im kennzeichnenden Teil das Anspruchs 1 erreicht. Vorteilhafte Weiterbildungen der Erfindung sind in den Unteransprüchen beschrieben.

Durch diese Merkmale wird erreicht, daß das Schienensystem mit hoher Gestaltungsfreiheit im wesentlichen aus herkömmlichen Rechteckprofilen zusammengesetzt werden kann, wozu die relativ leichten und kleinen Stege verwendet werden, welche eine flexible Verbindung einzelner Schienenabschnitte miteinander erlauben und auch leicht zu verfrachten sind. Der Abstand von den Laufprofilträgern zu dem wenigstens einen Tragprofilträger hilft dabei, eine relativ hohe Steifigkeit des Schienensystems zu verwirklichen.

Mithilfe der Stabilisierungsrollen, die an der Unterseite der Laufschienen abrollen können, wird ein Hin- und Herschwingen des Rollapparates und damit auch des von ihm mitgeführten Gegenstandes in der Laufrichtung des Rollapparates auch dann verhindert, wenn der Rollapparat, was für dessen kompakten Aufbau bevorzugt wird, nur eine Tragrolle bzw. zwei achsgleiche Tragrollen nebeneinander aufweist. Dabei kann der Durchmesser der Stabilisierungsrollen kleiner als der der Tragrollen sein, da die Stabilisierungsrollen nicht durch das Gewicht des Rollapparates und der daran hängenden Last beansprucht werden.

Gleichzeitig wird durch die beiden vertikalen Seitenführungsrollen ein ungewolltes Herausdrehen des Rollapparates aus dessen Laufrichtung verhindert. Die Seitenführungsrollen eignen sich außerdem bestens als Führungselemente, an denen schaltbare Weichenzungen angreifen können, ohne daß diese mit dem Gewicht des Rollapparates und der geförderten Last belastet werden, da sie durch den Angriff an den Seitenführungsrollen nur seitliche Führungskräfte aufzunehmen brauchen. Auch die Seitenführungsrollen können im Durchmesser relativ klein sein, da sie lediglich die seitlichen Führungskräfte aufzunehmen haben und an der Abtragung des Gewichts des Rollapparates und der Last ebenfalls nicht teilnehmen.

Weiter ist durch die Ausbildung wenigstens eines Mitnehmervorsprungs an der Außenseite des Rollapparats ein in Förderrichtung formschlüssiges Eingreifen der an dem angetriebenen Fördermittel angeordneten Mitnehmer wie auch das einfache Kuppeln des Rollapparates mit und dessen Entkuppeln von den Mitnehmern möglich. Dies ist wesentlich, wenn der Rollapparat auf dem Schienensystem angehalten werden soll, ohne daß das Fördermittel angehalten wird, oder wenn der Rollapparat bei weiterlaufendem Fördermittel wieder in Bewegung gesetzt werden soll. Ermöglicht wird die Einkuppelmöglichkeit insbesondere durch die mittels der Stabilisierungsrollen erreichte Lagestabilität bezüglich einer Schwingung um die Laufachse, wodurch eine Kraft auf den Rollapparat in dessen Fahrtrichtung einwirken kann, ohne daß der Rollapparat um die Tragrollenachse schwenkt. Eine solche Kraft tritt beispielsweise dann auf, wenn der Mitnehmer gegen den jeweiligen Rollapparat anläuft.

Vorteilhaft kann der Rollapparat zu der die Achsen der Seitenführungsrollen enthaltenden Vertikalebene symmetrisch ausgebildet sein. Ebenso können vorteilhaft die Stege einen Teil von Brücken darstellen, welche durch Druckgießen oder Strangpressen oder als Stanzbiegeblechteil hergestellte Profilkörper sind. Diese so ausgebildeten Brücken sind in ihrer Erstreckung in Fahrtrichtung verglichen mit der Gesamtlänge des jeweiligen Schienenabschnitts relativ kurz, so daß die Verwendung von relativ aufwendig herzustellenden Spezial-Profilen auf ein Minimum reduziert wird.

Gemäß der Erfindung sind Weichenzungen vorgesehen, welche in dem Führungsschlitz an den Seitenführungsrollen angreifen können und je nach Weichenstellung den Rollapparat für einen Geradeauslauf oder eine Abzweigung nach links oder nach rechts führen. Die Seitenführungsrollen können auch starr ausgebildet sein und so wie Führungs-Gleitstücke funktionieren. Jedoch wird dadurch das gesamte System schwergängiger, was besonders bei sehr vielen hintereinander geförderten Rollapparaten ein Problem darstellen kann.

Bevorzugt sind die Seitenführungsrollen daher drehbar.

Gemäß einer anderen bevorzugten Ausführungsform sind die zueinander parallel verlaufenden Weichenzungen auf beiden Seiten des Führungsschlitzes angeordnet und diese Weichenzungen sind in den jeweiligen Laufprofilträgern untergebracht. Grundsätzlich ist es möglich, die Weichenzungen auch an anderer Stelle als in den Laufprofilträgern unterzubringen. Beispielsweise könnten die Seitenführungsrollen nach oben verlängert werden und die Weichen oberhalb der Laufprofilträger angeordnet werden. Jedoch stellt die Konstruktion mit in den Laufprofilträgern angeordneten Weichenzungen eine besonders platzsparende und optimalen Schutz für den Weichenmechanismus gewährende Konstruktion dar, welche überdies sehr zuverlässig arbeitet, weil die Weichenzungen so direkt in dem Führungsschlitz angreifen können. Aufgrund der Ausbildung wenigstens einer Seitenführungsrolle am Rollapparat, an welcher die Weichenzunge innerhalb des Führungsschlitzes angreift, braucht die Weichenzunge lediglich die seitlichen Führungskräfte aufzunehmen und wird nicht von dem Gewicht des Rollapparates und der daran hängenden Last belastet.

Vorzugsweise sind die Tragprofilträger quadratische oder rechteckige Vierkantrohre, deren Außenflächen horizontal bzw. vertikal ausgerichtet sind. Jedoch können diese auch andere Formen aufweisen, beispielsweise Rundrohre oder Vollprofile sein.

Erfindungsgemäß sind Mitnehmer zum automatischen Fördern der Rollapparate vorgesehen sein, welche durch das Innere des Profilkörpers verlaufen. Es ist jedoch auch möglich, die Schienen und somit die entsprechenden Profilkörper so zu konstruieren, daß die Hängeförderanlage nur für den manuellen Betrieb geeignet ist, bei welchem die Rollapparate von Hand weitergeschoben werden.

Vorteilhaft ist das Schienensystem im Baukastensystem aufgebaut und setzt sich im wesentlichen aus den Schienenabschnitten Bogenabschnitt, Streckenabschnitt, 2-Wege-Weiche gerade / 45° links, 2-Wege-Weiche gerade / 45° rechts, 2-Wege-Weiche 45° rechts / 45° links, 3-Wege-Weiche gerade / 45° rechts / 45° links und Kreuzungsweiche zusammen. Durch die Kombination dieser Abschnitte läßt sich bereits ein beliebig verlaufendes Schienensystem aufbauen, wozu jedoch nur die kleine Anzahl der vorgenannten Schienenabschnitte benötigt werden.

Die Weichen weisen vorteilhaft jeweils ein Herzstück auf, an welchem die jeweilige Weichenzunge bzw. die jeweiligen Weichenzungen gelenkig gelagert sind. Dabei sind besonders die 2-Wege-Weiche gerade / 45° links und 2-Wege-Weiche gerade / 45° rechts achsensymmetrisch zueinander aufgebaut und das Herzstück ist derart ausgebildet, daß durch jeweiliges Herumdrehen des Herzstücks wahlweise die 2-Wege-Weiche gerade / 45° links oder die 2-Wege-Weiche gerade / 45° rechts ausgebildet werden kann. Dazu müßte eventuell ein Handhebel umgebaut werden. Insgesamt läßt sich jedoch ein Umbau mit weitaus geringeren Kosten verwirklichen, als durch komplettes Austauschen gegen die jeweils andere Weiche.

Gemäß einer besonders vorteilhaften Weiterbildung ist das Lastaufnahmemittel ein schwenkbar an das Fahrgestell angelenkter Lasthaken. Durch die Schwenkbarkeit wird neben dem Stabilisierungseffekt durch die Stabilisierungsrollen eine zusätzliche Stabilisierung erreicht, weil eine auf die an dem Lasthaken hängende Last aufgebrachte und in Fahrtrichtung der Rollapparate wirkende Kraft zu einem Schwenken und damit Nachgeben des Hakens führt. Aufgrund des so verkürzten Hebelarms zwischen dem Angriffspunkt der Kraft an dem Rollapparat, d.h. der Schwenkachse des Lasthakens, und der Laufachse, wird das um die Laufachse wirkende Drehmoment verkleinert und somit eine weitere Stabilisierung des Rollapparats erreicht.

Vorteilhaft verlaufen die Achsen der Tragrollen und der Stabilisierungsrollen jeweils durchgehend und sind an dem Fahrgestell des Rollapparats an drei Punkten abgestützt. Durch die durchgehenden Achsen wird eine Versteifung des Fahrgestells erreicht.

Gemäß einer weiteren vorteilhaften Weiterbildung der Erfindung ist der Achsabstand der Seitenführungsrollen größer als der Achsabstand der Stabilisierungsrollen. Dadurch wird bei kompakter Bauweise des Rollapparats eine möglichst gute Laufstabilität erreicht.

Die Erfindung wird nachfolgend anhand bevorzugter Ausführungsbeispiele unter Bezugnahme auf die Zeichnung erläutert. In der Zeichnung zeigen:
Figur 1 eine Draufsicht auf einen Teil eines Schienensystems in stark schematisierter Form;
Figur 2 eine schematisierte Draufsicht auf verschiedene Weichenstellungen bei dem in Figur 1 gezeigten Teil des Schienensystems;
Figur 3 eine 2-Wege-Weiche gerade / 45° links in verschiedenen Weichenstellungen und mit schematisiertem Rollapparat;
Figur 4a) eine perspektivische, schematisierte Ansicht eines Schienenabschnitts;
Figur 4b) einen Schnitt entlang der in Figur 4c) mit A-B bezeichneten Schnittlinie;
Figur 4c) eine Seitenansicht des in Figur 4b) gezeigten Schienenabschnitts zusammen mit Rollapparaten in der Seitenansicht;
Figuren 5a) und 5b) einen Schnitt entsprechend Figur 4b), wobei diese Ausführungsform automatische Mitnehmer aufweist;
Figur 6 eine Verbindungsstelle von Schienenabschnitten, wobei zwei Brücken miteinander verschraubt sind;
Figuren 7a) einen Schnitt entsprechend Figur 4b), wobei zusätzlich schematisch die Weichenzungen dargestellt sind;
Figur 7b) einen Rollapparat mit den Seitenführungsrollen in der Seitenansicht;
Figur 7c) eine schematisierte Darstellung des Rollapparates mit den Seitenführungsrollen und den Weichenzungen;
Figuren 8a) und 8b) Schnitte entsprechend Figur 4b), jedoch mit unterschiedlich großen Tragprofilträgern;
Figuren 9 und 10 einen Schnitt entsprechend Figur 4b) eines weiteren Ausführungsbeispiels mit jeweils unterschiedlich hohen Tragprofilträgern;
Figur 11 eine Darstellung entsprechend Figuren 9 und 10 einer weiteren Ausführungsform, welche für den Innenläuferbetrieb mit automatischen Mitnehmern geeignet ist;
Figur 12 eine Draufsicht auf ein Streckenabschnitt des Schienensystems;
Figur 13 eine Draufsicht auf ein Bogenabschnitt des Schienensystems;
Figur 14 eine Draufsicht auf eine Kreuzungsweiche des Schienensystems;
Figur 15 eine Draufsicht auf eine 2-Wege-Weiche gerade / 45° links;
Figur 16 eine Draufsicht auf eine 2-Wege-Weiche gerade / 45° rechts;
Figur 17 eine Draufsicht auf eine Doppel-Weiche 45° rechts / 45° links;
Figur 18 eine Draufsicht auf eine 3-Wege-Weiche gerade / 45° rechts / 45° links;
Figuren 19a und 19b den Rollapparat in der Vorderansicht bzw. in der Seitenansicht
Figuren 20a und 20b Endansichten von weiteren Ausführungsformen der Schiene als Schweißkonstruktion;
Figuren 21a und 21b Endansichten von noch weiteren Ausführungsformen der Schiene als Schweißkonstruktion;
Figuren 22a und 22b Endansichten von noch weiteren Ausführungsformen der Schiene als Schraubkonstruktion;
Figur 23 eine Draufsicht auf eine 2-Wege-Weiche gerade / 45° links;
Figur 24 eine Draufsicht auf eine 2-Wege-Weiche gerade / 45° rechts;
Figur 25 eine Draufsicht auf eine Doppel-Weiche 45° rechts / 45° links;
Figur 26 eine Draufsicht auf eine 3-Wege-Weiche gerade / 45° rechts / 45° links.

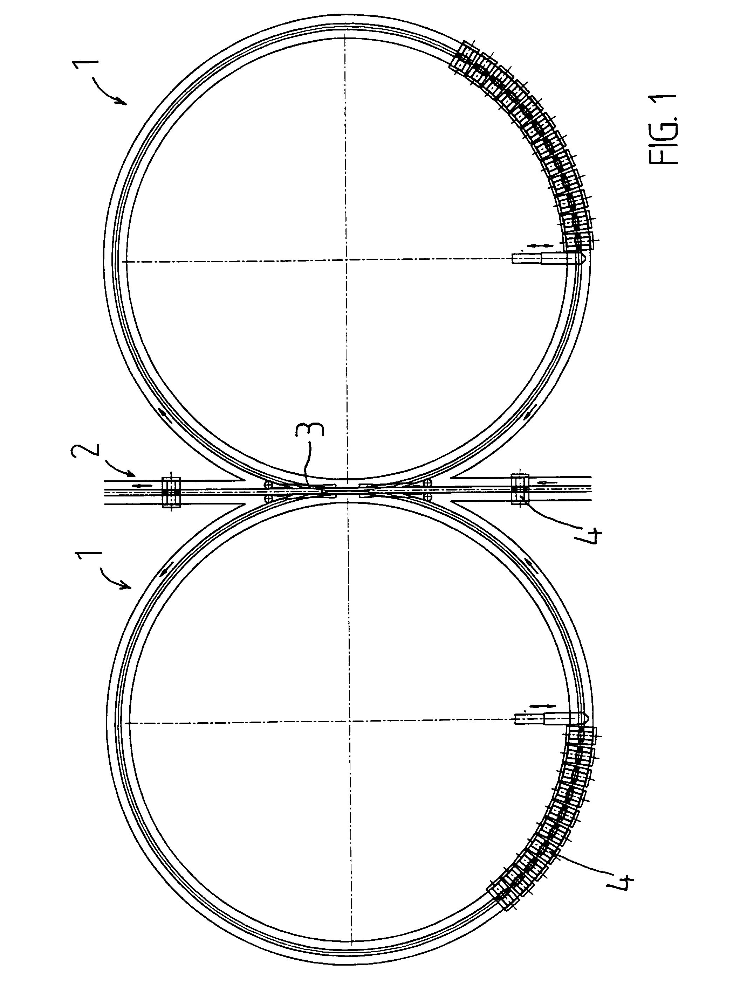

Figur 1 zeigt eine schematisierte Darstellung einer Draufsicht auf einen Teil einen Schienensystems, bei welchem zwei Umlaufschleifen 1 mit einer geraden Strecke 2 verbunden sind, wobei Weichenzungen 3 umgeschaltet werden können, um ebenfalls schematisch dargestellte Rollapparate 4 ausgehend von der Strecke 2 in die Schleifen 1 hineinzuführen beziehungsweise aus diesen Schleifen 1 wieder auf die Strecke 2 herauszuführen. Wie aus der Zeichnung gut zu erkennen ist, sind hierzu zwei 3-Wege-Weichen vorgesehen, welche eine Geradeausfahrt sowie ein Abbiegen nach links und ein Abbiegen nach rechts, beziehungsweise eine Geradeausfahrt oder ein Auffahren auf die Strecke 2 von links oder von rechts erlauben.

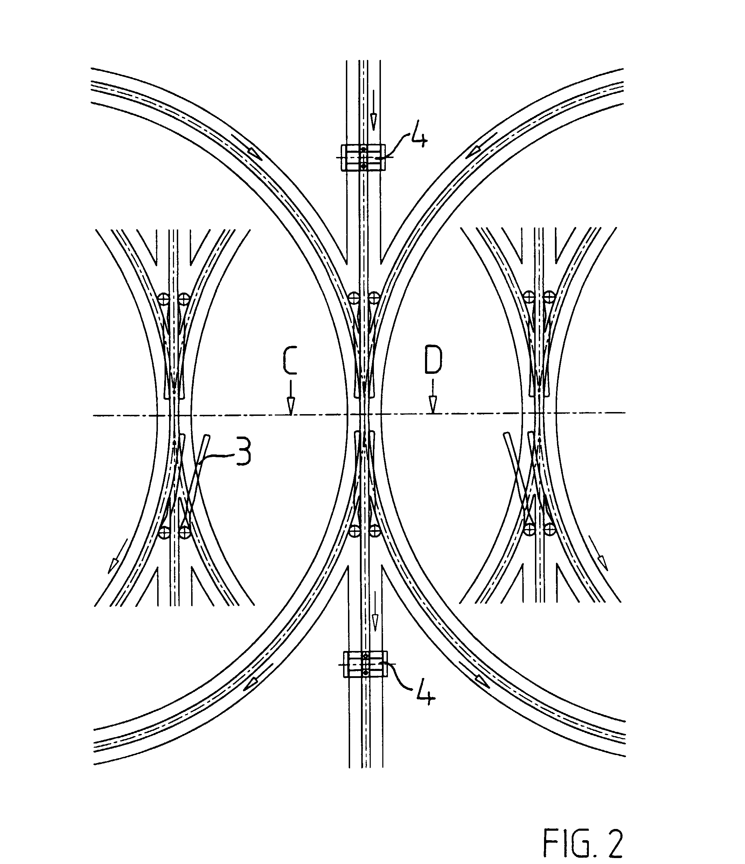

Figur 2 zeigt eine schematische Darstellung der Schienen mit den entsprechenden Weichenzungen 3 in verschiedenen Stellungen. Die Weichenzungen 3 werden jeweils einzeln oder paarweise derart gegenüber den Schienen verschwenkt, daß sie stets im wesentlichen parallel zueinander verlaufen.

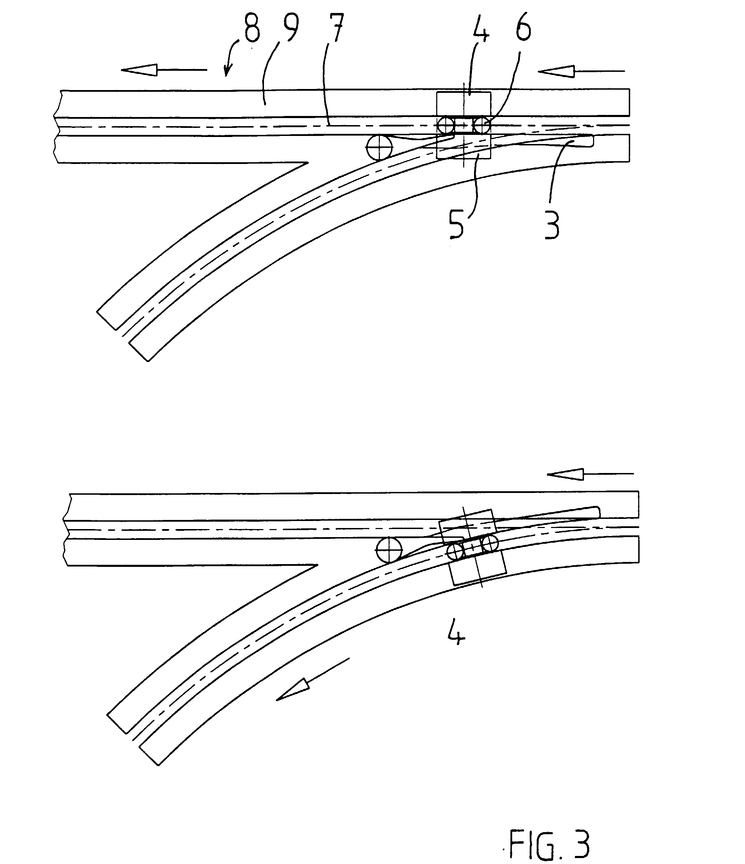

In Figur 3 ist ebenfalls schematisch eine 2-Wege-Weiche dargestellt, welche eine Geradeausfahrt sowie ein Abbiegen nach links erlaubt. Ebenfalls schematisch in der Draufsicht gesehen ist der Rollapparat 4 dargestellt, welcher mit Tragrollen 5 und Seitenführungsrollen 6 versehen ist, wobei die Seitenführungsrollen 6 in einem Führungsschlitz 7 geführt verlaufen. Die Laufprofile 8 sind mit oberen Laufflächen 9 versehen, längs deren die Tragrollen 5 abrollen. Durch die jeweilige Stellung der Weichenzunge 3 beziehungsweise der Weichenzungen 3 werden die Seitenführungsrollen 6 derart gelenkt, daß entsprechend eine Geradeausfahrt oder ein Abbiegen ermöglicht wird.

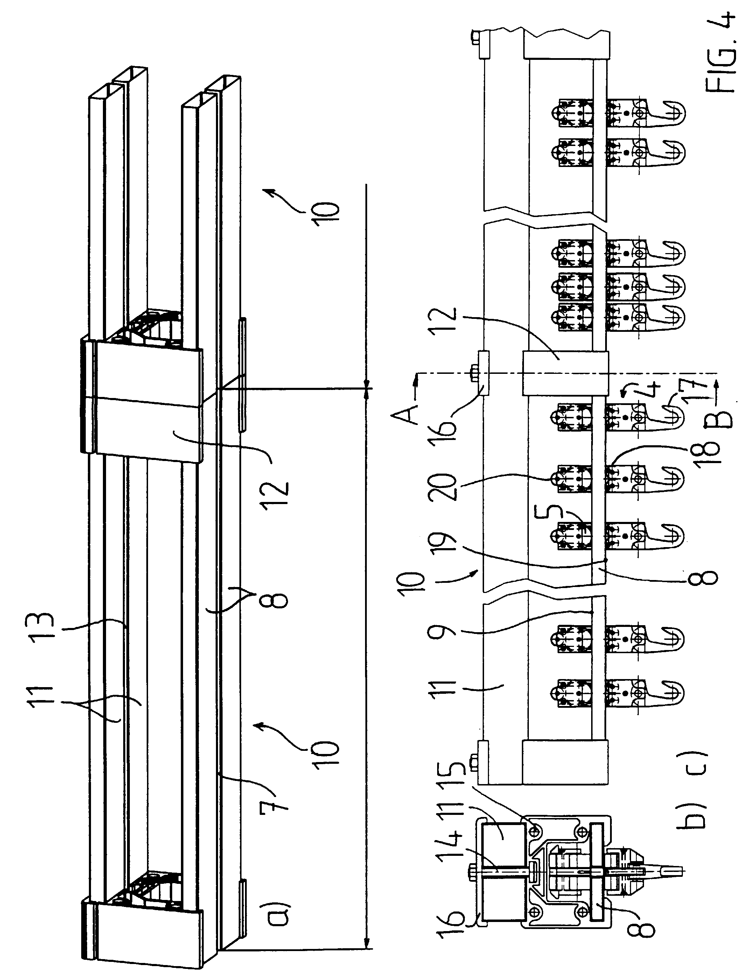

Figur 4 zeigt schematisch den Aufbau der Schienen, wobei Figur 4a) eine perspektivische, schematische Ansicht eines Schienenabschnitts zeigt, welcher sich gemäß diesem Ausführungsbeispiel aus zwei Streckenabschnitten 10 zusammensetzt. Zu erkennen sind in Figur 4a) die beiden Laufprofile 8 und zwei Tragprofile 11, welche mittels Brückenabschnitten 12 miteinander verbunden sind. Die einander benachbarten Streckenabschnitte 10 sind mittels der Brücken 12 miteinander verbunden, wie weiter unten noch näher erläutert wird. Ebenso werden mittels der Brücken 12 die Laufprofile 8 in einem definierten Abstand zueinander gehalten, so daß der Führungsschlitz 7 eine definierte Breite aufweist, um die Seitenführungsrollen 6 dazwischen mit dem erforderlichen Spiel aufzunehmen. Ebenso werden die Tragprofilträger 11 von den Brücken 12 in einem bestimmten Abstand zueinander gehalten, so daß ein Befestigungsschlitz 13 zwischen den Tragprofilträgern 11 ausgebildet wird, durch welche Klemmschrauben 14 hindurchgesteckt werden können. Von den mit ihren Köpfen in einer unterschnittenen Nut an der Oberseite der Brücke 12 sitzenden Klemmschrauben 14 werden die Tragprofilträger 11 mittels oberen Klemmplatten 16 gegen die jeweilige Brücke 12 angepreßt, welche als Profilkörperabschnitt 15 ausgebildet ist, wie aus Figur 4b) ersichtlich.

Im Gegensatz zu der Darstellung nach Figur 4a) sind die Tragprofilträger 11 gemäß der Darstellungen nach Figur 4b) und Figur 4c) nicht identisch zu den Laufprofilträgern 8, sondern sind im Querschnitt höher ausgebildet, um eine höhere Biegefestigkeit zu erreichen.

Figur 4c) zeigt eine Seitenansicht eines Schienen-Streckenabschnitts oder Schienenabschnitts 10, wobei deutlich die Brücken 12, die Klemmplatten 16, die Tragprofilträger 11, die Laufprofilträger 8 und die Rollapparate 4 zu erkennen sind. Die Rollapparate 4 weisen einen unteren Haken 17 auf, welcher beispielsweise zum Aufnehmen von Kleiderbügeln dienen kann, sowie die bereits erwähnten Tragrollen 5 und untere Stabilisierungsrollen 18 auf, welche gegen eine untere Lauffläche 19 der Laufprofilträger 8 abgestützt sind, während die Tragrollen 5 auf der oberen Lauffläche 9 der Laufprofilträger 8 abgestützt sind. Die Rollapparate 4 weisen Mitnehmervorsprünge 20 auf, welche zum automatischen Mitnehmen der Rollapparate 4 geeignet sind.

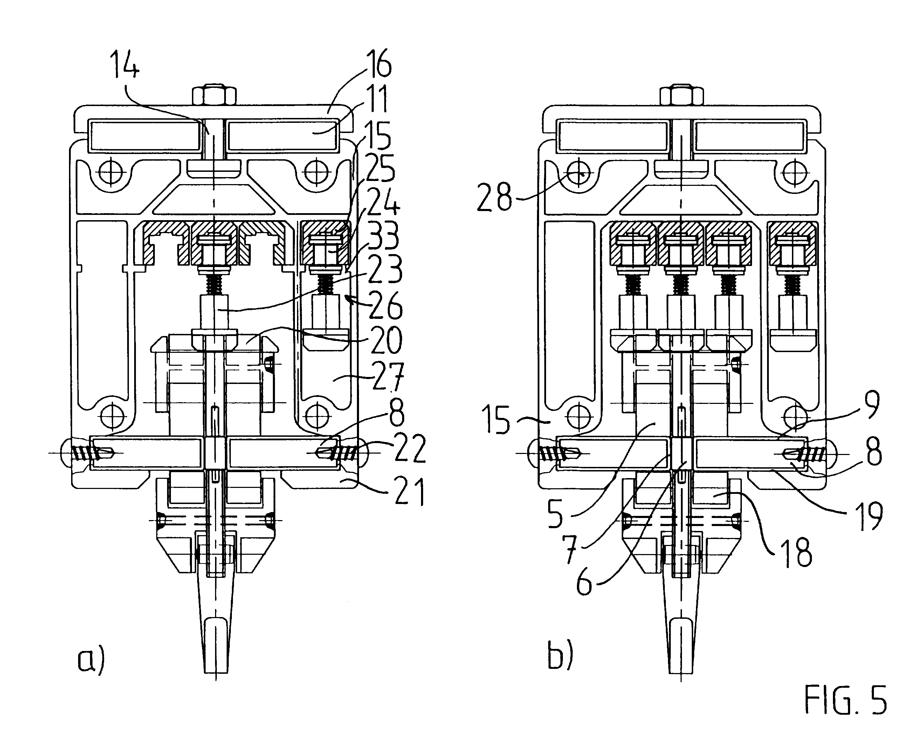

Figuren 5a und 5b zeigen Schnitte entlang der in Figur 4 mit A-B bezeichneten Schnittlinie und damit Schnitte entsprechend Figur 4b). Zu erkennen sind wieder die Tragprofilträger 11, welche mittels der Klemmplatte 16 mit Hilfe von Klemmschrauben 14 gegen den Profilkörper 15 angepreßt sind. Die Laufprofilträger 8 werden von Flanschen 21 untergriffen bzw. getragen, sind mit ihrer Oberseite an seitlichen Schultern des Profilkörpers 15 abgestützt und sind zusätzlich mit Hilfe von Schrauben 22 mit dem Profilkörper 15 fest verbunden. Anstatt von Schrauben 22 können z.B. auch entsprechende Nieten verwendet werden. Weiter sind Mitnehmer 23 zu erkennen, welche an dem Mitnehmervorsprung 20 angreifen können. Die Mitnehmer 23 sind mit einer Kette 24 verbunden, welche in einer Kunststoffschiene 25 verlaufen kann. Dabei verläuft das Leertrum der Kette mit den Mitnehmern in einer in dem Profilkörper 15 ausgebildeten Kammer 27, in welche zu diesem Zweck die Kunststoffschiene 25 eingepreßt wurde. Zum Aufnehmen dieser Kunststoffschiene 25 kann der Profilkörper 15 bereits mit entsprechend angeformten Vorsprüngen 33 versehen sein.

Wie Figur 5b) zeigt, können bis zu 3 Mitnehmer nebeneinander in dem Profilkörper 15 angeordnet sein, was beispielsweise erforderlich sein kann, um eine Kollision von Mitnehmern an Streckenabschnitten, wie sie in Figur 2 durch die Schnittlinie C-D bezeichnet sind, zu vermeiden. Je nachdem, ob nach einem derartigen Streckenabschnitt Geradeausfahrt, Abbiegen nach links oder Abbiegen nach rechts gewünscht wird, was durch die Weichenzungen 3 vorgegeben wird, gelangen die entsprechenden zwei hinter der Weiche nicht mehr benötigten Mitnehmer außer Eingriff mit dem Mitnehmervorsprung 29, so daß sich beispielsweise wieder das in Figur 5a) gezeigte Bild ergibt.

Wie bereits erwähnt, sind die Laufprofilträger 8 mit einer oberen Lauffläche 9 und einer unteren Lauffläche 19 versehen, wobei sich auf der oberen Lauffläche 9 die Tragrollen 5 abstützen und an der unteren Lauffläche 19 die Stabilisierungsrollen 18 abstützen. Durch den Profilkörper 15 werden die Laufprofilträger 8 in definiertem Abstand zueinander gehalten, wodurch der Führungsschlitz 7 ausgebildet wird, in welchem die Seitenführungsrollen 6 geführt verlaufen.

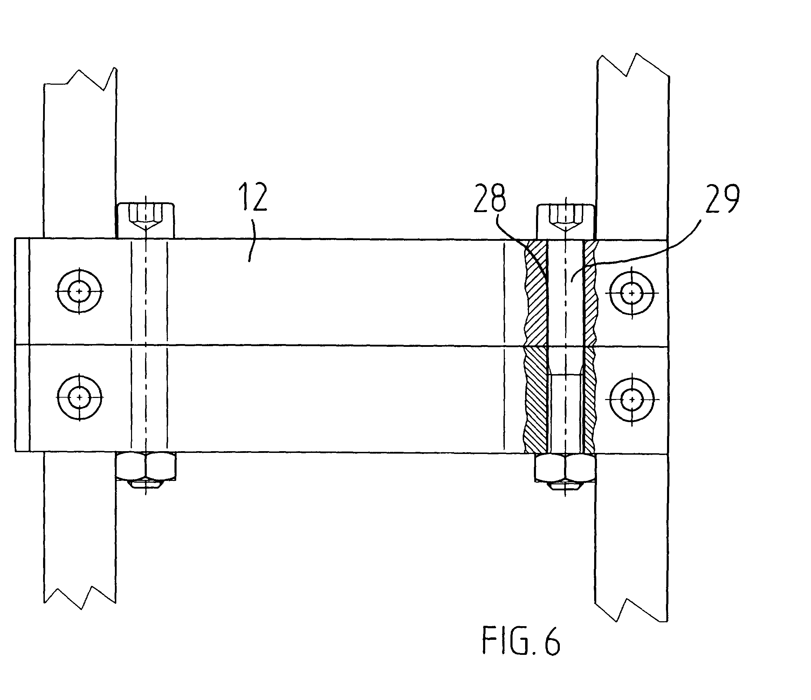

Weiter gut zu erkennen sind die Befestigungs- oder Verbindungsbohrungen 28, welche in dem Profilkörper 15 ausgebildet sind und sich parallel zu den Lauf- und Tragprofilkörpern erstrecken. Mittels dieser Befestigungs- oder Verbindungsbohrungen 28 können mehrere Brücken 12 miteinander oder mit einem beliebigen anderen Abschnitt verbunden werden, wie in Figur 6 dargestellt ist. Dazu können die Brückenabschnitte 12 mittels herkömmlicher Verbindungsschrauben 29 miteinander verbunden werden.

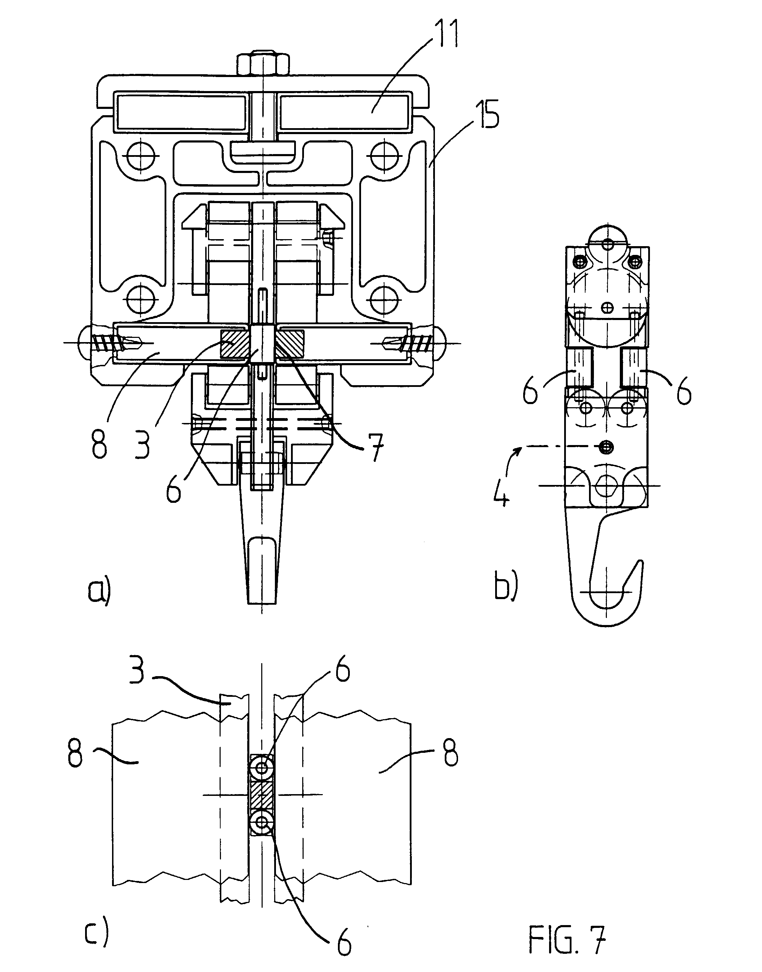

Figuren 7a) bis 7c) zeigen eine weitere Ausführungsform, bei welcher der Profilkörper 15 in einem für den manuellen Betrieb vorgesehenen Abschnitt niedriger gebaut ist als der für den automatischen Betrieb. Mit anderen Worten sind die Tragprofilträger 11 und die Laufprofilträger 8 enger beieinander angeordnet, weil keine Bauhöhe für die Mitnehmerketten benötigt wird. Figur 7b zeigt nochmals den Rollapparat 4 in vergrößerter Darstellung, während Figur 7c eine schematische Draufsicht auf die Laufprofilträger 8 zeigt. Wie aus Figuren 7b) und 7c) zu erkennen ist, sind zwei Seitenführungsrollen 6 vorgesehen, welche in Fahrtrichtung des Rollapparats 4 gesehen im Abstand zueinander angeordnet sind. Durch das Vorsehen von zwei Seitenführungsrollen 6 wird ein stabilerer Betrieb und eine verbesserte Führung gewährleistet. Die Weichenzungen 3 sind jeweils in den Laufprofilträgern 8 angeordnet und sind entsprechend in diesen verschwenkbar. Dadurch wird einerseits die Möglichkeit eröffnet, daß die Weichenzungen 3 zum einen direkt in dem Führungsschlitz 7 an den Seitenführungsrollen 6 angreifen können und zum anderen platzsparend und geschützt untergebracht sind und nicht von dem Gewicht des Rollapparates und der daran hängenden Last beansprucht werden.

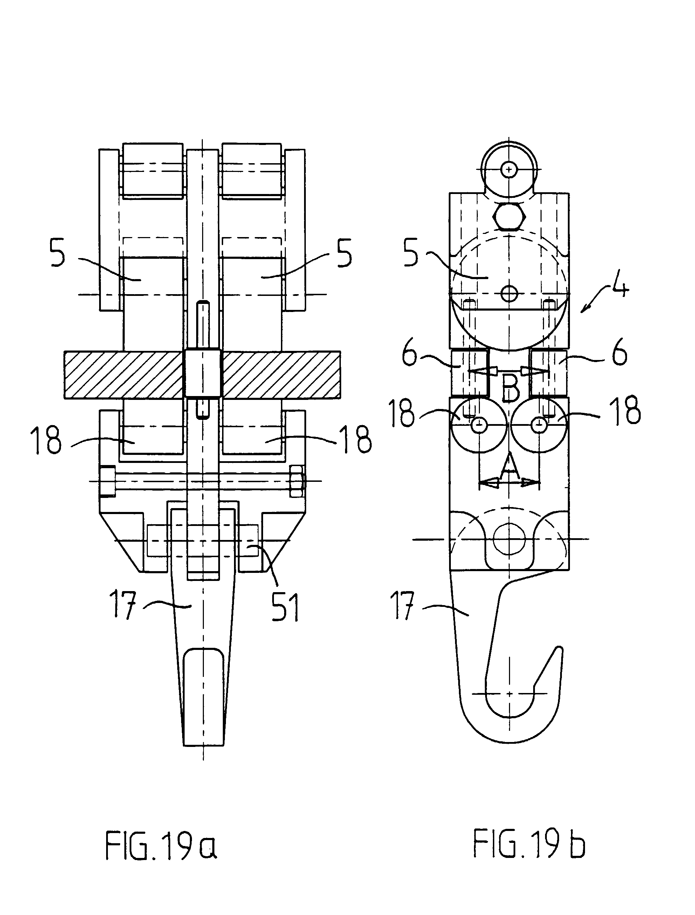

In den Figuren 19a und 19b ist der Rollapparat detailliert dargestellt, wobei gleiche Teile mit gleichen Bezugszeichen wie in den Figuren 7a) bis 7c) bezeichnet sind. Fig. 19a zeigt eine Vorderansicht des Rollapparats in Gegenlaufrichtung desselben gesehen, während Fig. 19b eine Seitenansicht des Rollapparats, also quer zur Laufrichtung betrachtet, zeigt. Aus der Fig. 19b ist zu erkennen, daß der Achsabstand A zwischen den beiden Paaren von Stabilisierungsrollen 18 kleiner als der Achsabstand B zwischen den beiden Seitenführungsrollen 6 ist.

Die Mitnehmervorsprünge 20 sind gemäß dem dargestellten Ausführungsbeispiel als Mitnehmerrollen ausgebildet. Gemäß anderen Ausführungsformen, wie beispielsweise in Fig. 5 dargestellt ist, können die Mitnehmervorsprünge 20 als einfache Nasen ausbildet sein.

Der in den Figuren 19a und 19b gezeigte Rollapparat 4 ist zu seiner vertikalen Quermittelebene symmetrisch ausgebildet. Bei dem symmetrischen Rollapparat 4 ist das Fahrgestell in Vorderansicht etwa H-förmig ausgebildet und durchgreift mit seinem H-Steg den Führungsschlitz 7 zwischen zwei über diesen voneinander getrennten Laufprofilträgern 8 der Laufschiene. Entsprechend sind die Tragrolle 5 und jede Stabilisierungsrolle 8 in zwei achsgleiche Rollen unterteilt.

Ein Lasthaken 17 ist am unteren Ende des Rollapparats 4 mittels einer Lasthaken-Schwenkachse 51 an den Rollapparat derart angelenkt, daß der Lasthaken 17 um die Schwenkachse 51 schwenken kann. Dadurch wird eine weitere Stabilisierung erreicht, weil der Lasthaken 17 nachgeben kann und so keine Kräfte mit einem langen Hebelarm auf den Rollapparat überträgt.

Durch den wie anhand der Figuren 19a und 19b beschriebenen, einzeln frei längs der Schiene verfahrbaren Rollapparat wird erreicht, daß dieser nur einen Freiheitsgrad hat, nämlich nur längs der Schiene verfahrbar ist. Dadurch können an dem einzelnen Rollapparat Kräfte von außen angreifen, wie sie beispielsweise bei Einkuppeln und Auskuppeln des einzelnen Rollapparats in einen automatischen Mitnehmer entstehen, von dem Rollapparat aufgenommen werden, ohne daß dieser seine Lagestabilität verliert.

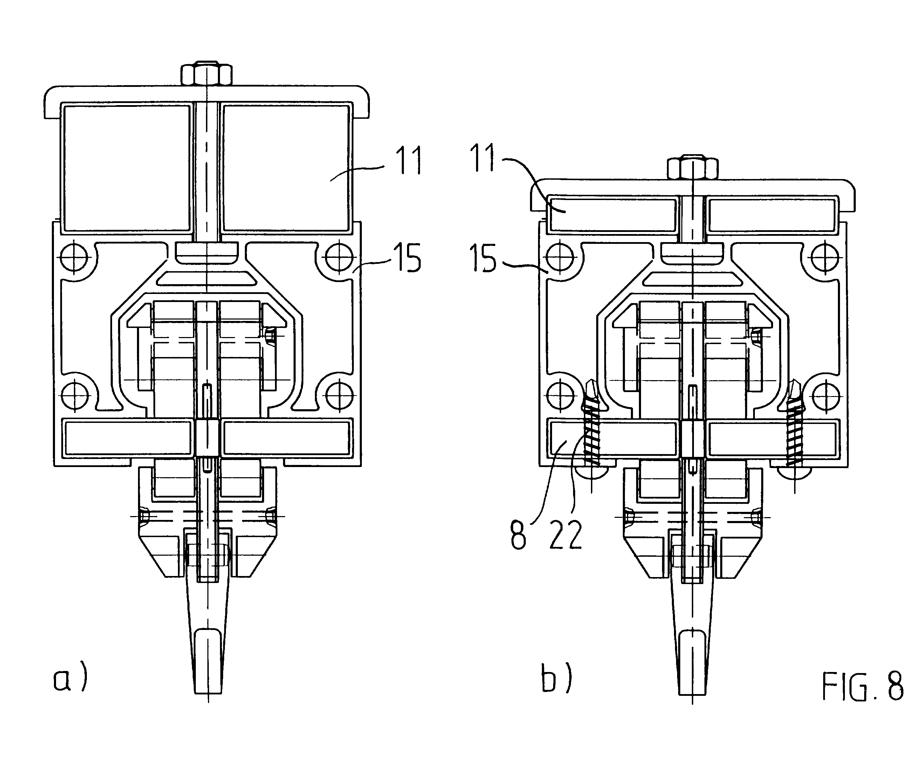

Weitere Ausführungsformen sind in Figur 8 dargestellt, wobei vor allem zu erkennen ist, daß auch bei gleichem Profilkörper 15 unterschiedliche Tragprofilträger 11 je nach gewünschter Biegesteifigkeit verwendet werden können.

Darüber hinaus ist aus Figur 8b) zu erkennen, daß die Laufprofilträger 8 nicht notwendigerweise wie bei den vorangehenden Ausführungsbeispielen von der Seite her mit dem Profilträger 15 verschraubt sein müssen, sondern daß die Schrauben 22 auch durch den Flansch 21 und durch den jeweiligen Laufprofilträger 8 hindurch und in den Profilkörper 15 hineingeschraubt sein können. Selbstverständlich können auch hier wieder Nieten anstatt der Schrauben 22 verwendet werden. Es ist auch möglich, daß die Laufprofilträger mit dem Profilkörper 15 bei der Montage verklebt oder verschweißt werden.

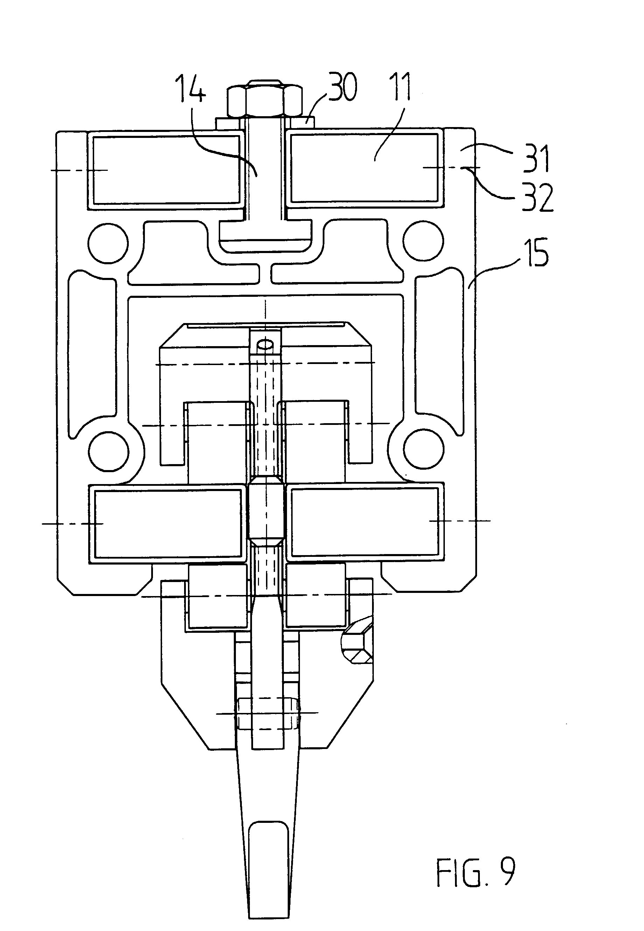

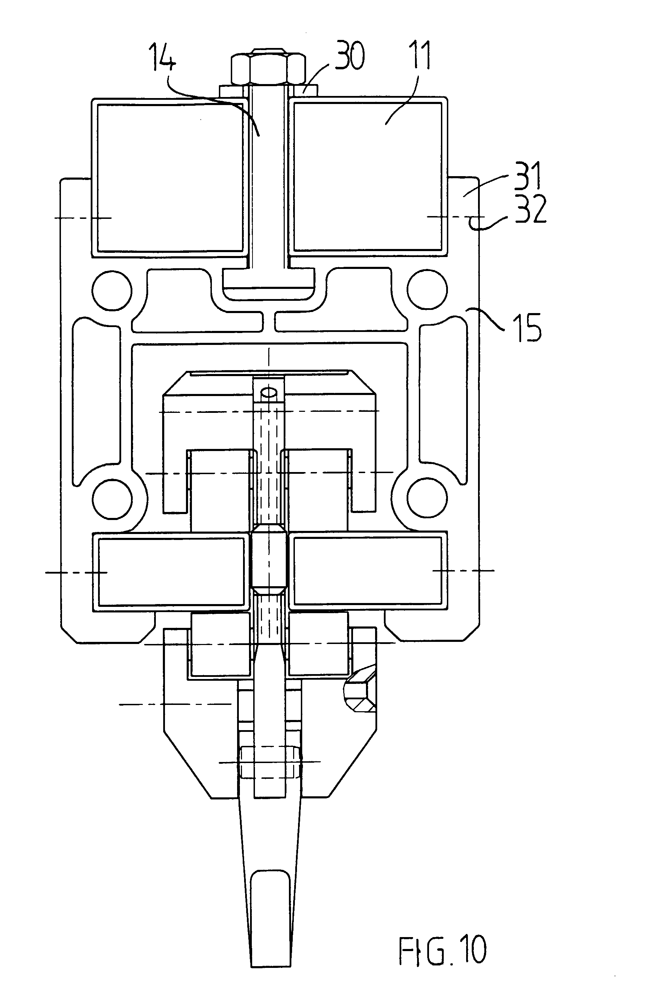

Figuren 9 und 10 zeigen Ausführungsbeispiele, gemäß welchen auf die Klemmplatte 16 der vorangehenden Ausführungsbeispiele verzichtet wurde und stattdessen die Tragprofilträger 11 einfach mittels der Klemmschrauben 14 über Scheiben 30 mit dem Profilträger 15 verspannt sind. Zusätzlich können obere vertikale Flansche 31 ausgebildet sein, um die Tragprofilträger 11 sicher aufzunehmen. Wie durch die Linien 32 angedeutet ist, können die Tragprofilträger zusätzlich mittels Nieten oder Schrauben mit dem Profilkörper 15 über die Flansche 31 vernietet beziehungsweise verschraubt werden. Bei dem Ausführungsbeispiel gemäß Figur 9 schließen die Tragprofilträger bündig mit den Flanschen 31 ab, was zu einer besonders geschützten und optisch ansprechenden Gestaltung führt. Wie die niedrige Bauhöhe der Profilkörper gemäß den Figuren 9 und 10 erkennen läßt, sind diese Ausführungsbeispiele für den manuellen Betrieb geeignet, da in dem Profilkörper 15 automatische Mitnehmer keinen Platz finden.

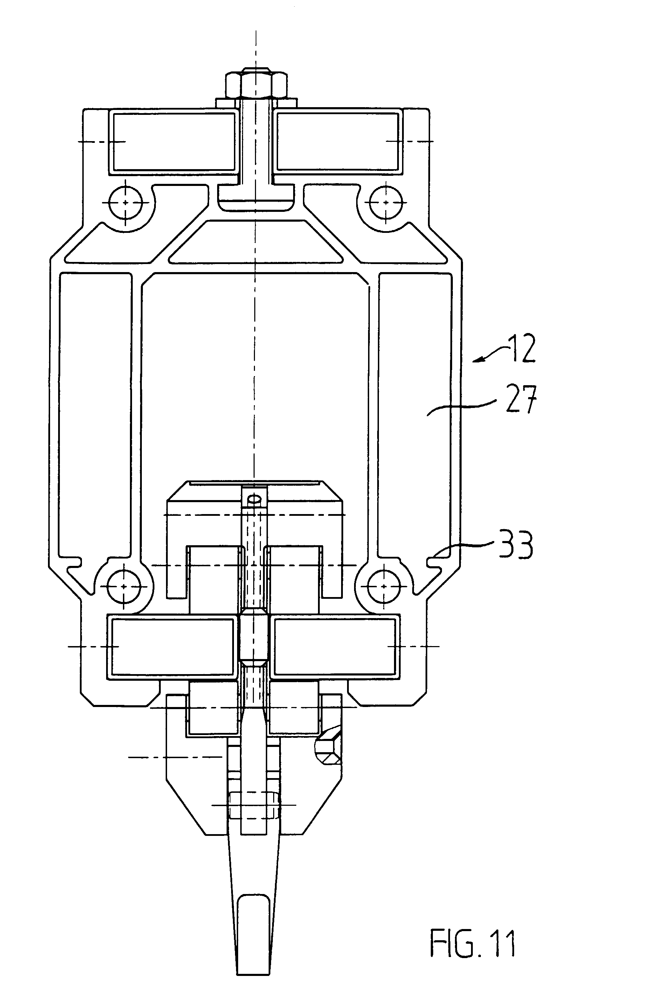

Eine Ausführungsform entsprechend Figur 9, welche jedoch im Gegensatz dazu für den automatischen Betrieb geeignet ist, ist in Figur 11 dargestellt. Wie zu erkennen ist, sind die Konstruktionen gemäß Figur 9 und Figur 11 grundsätzlich gleich, wobei jedoch der Profilkörper 15 sowohl höher als auch breiter gestaltet ist, um die Mitnehmer einschließlich des Leertrums unterbringen zu können. Für die Leertrums sind die Kammern 27 vorgesehen. Weitere Vorsprünge wie der Vorsprung 33 können vorgesehen sein, um andere Abschnitte wie Hydraulikschläuche oder Kabelkanäle an der Brücke 12 festzulegen.

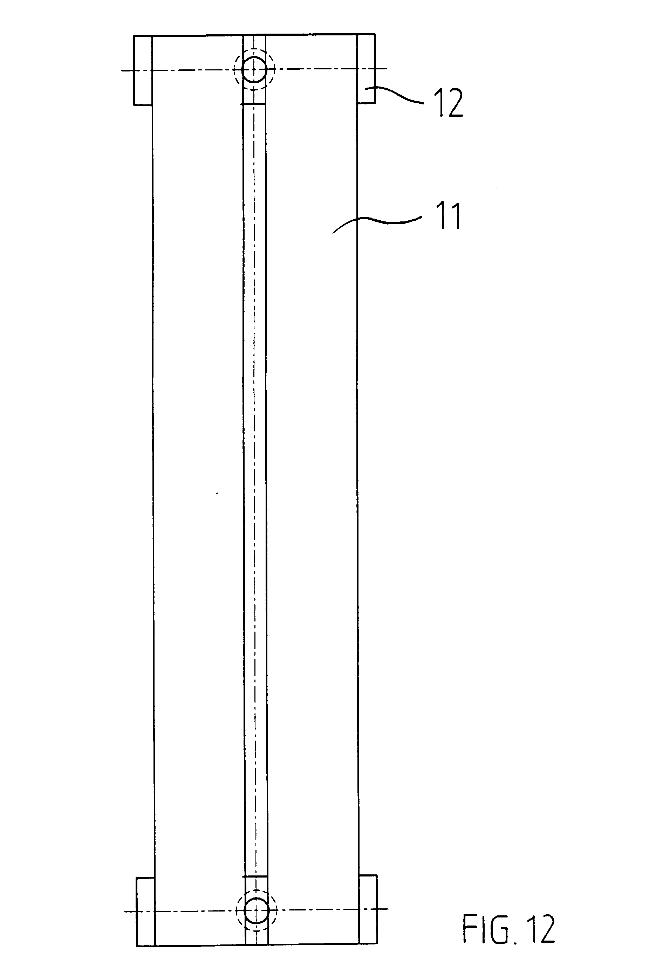

In den Figuren 12 bis 18 sind verschiedene Schienenabschnitte gezeigt, aus welchen das gesamte Schienensystem baukastenartig aufgebaut ist. Mehr Schienenabschnitte sind im Prinzip nicht erforderlich, um eine beliebige Schienenstrecke zu realisieren. Gleiche Bauteile sind in den Figuren 12 bis 18 wie auch in den anderen Figuren mit gleichen Bezugszeichen bezeichnet.

Figur 12 zeigt einen geraden Streckenabschnitt 10 in der Draufsicht. Dieses Streckenabschnitt ist grundsätzlich schon in Figur 4a) in perspektivischer Darstellung gezeigt worden. Zu erkennen sind die Tragprofilträger 11, unterhalb welchem deckungsgleich die Laufprofilträger 8 angeordnet sind, wobei die Tragprofilträger 11 und die Laufprofilträger 8 mittels der an beiden Enden des Schienenabschnitts 10 angeordneten Brücken 12 zusammengehalten werden. Ebenso dienen die mit den Stegen versehenen Brücken 12 wie schon erwähnt zum Verbinden mit anderen Schienenabschnitten.

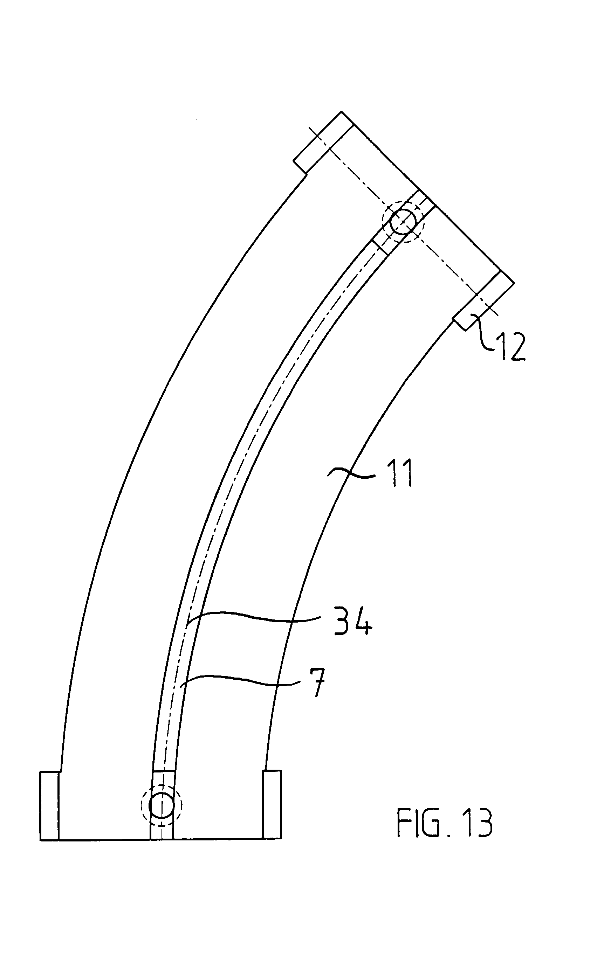

Figur 13 zeigt einen entsprechenden Bogenabschnitt, wobei der Winkel zwischen der Mittellinie 34 des Führungsschlitzes 7 zwischen der Eintrittsstelle des Bogenabschnitts und der Austrittsstelle des Bogenabschnitts 45° beträgt. Um eine enge Toleranz bezüglich des Bogenradius und des Eintritts- und Austrittswinkels der Bogenabschnitte zu realisieren, können die Trag- und Laufprofilträger auch als Kunststofformteile, beispielsweise als Vollprofilträger, ausgebildet sein.

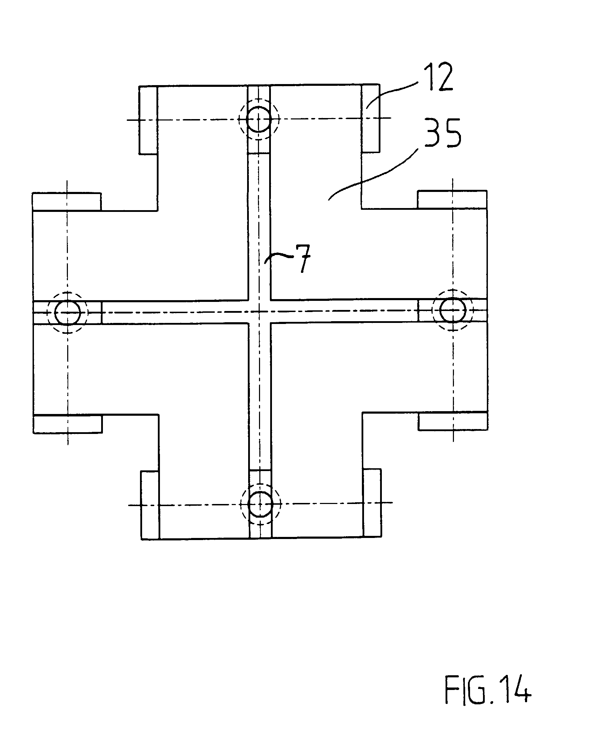

Figur 14 zeigt eine Kreuzungsweiche, wobei vier Kreuzungsweichenwinkel 35 mittels der Brücken 12 miteinander verbunden sind. Die Führungsschlitze 7 kreuzen sich unter einem Winkel von 90°.

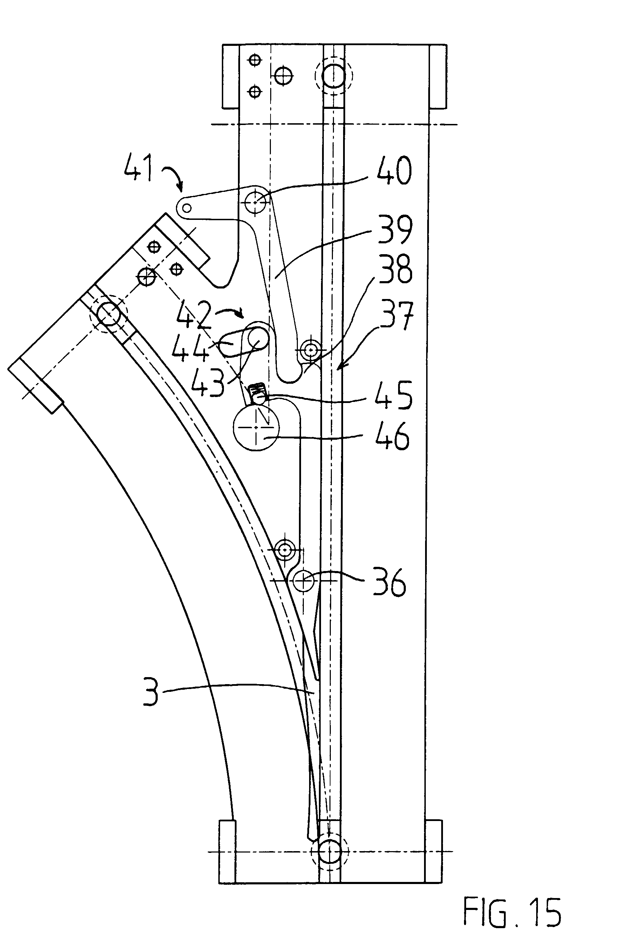

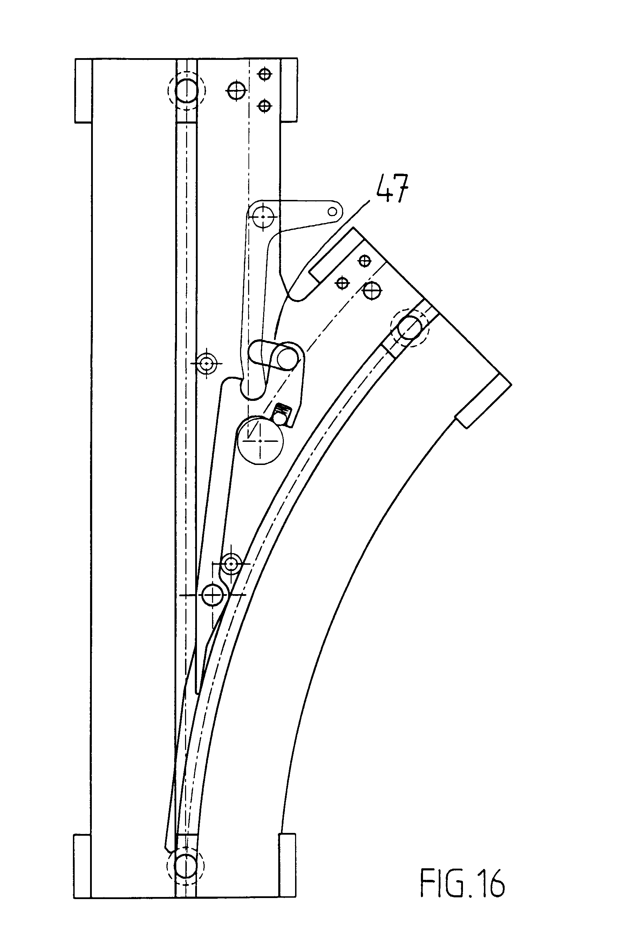

Figuren 15 und 16 zeigen 2-Wege-Weichen, bei welchen eine Geradeausfahrt und ein Abbiegen um 45° nach links oder nach rechts ermöglicht wird. Zwecks besserer Anschaulichkeit sind die Weichenzungen 3 schraffiert dargestellt. Diese sind an Lagerbolzen 36 schwenkbar gelagert und setzen sich weiter nach hinten fort. Das hintere Ende 37 der Weichenzungen ist mit einer Ausnehmung 38 versehen, in welcher ein Kniehebel 39 aufgenommen werden kann, der seinerseits um einen Lagerbolzen 40 schwenkbar ist. Eine automatische Schalteinrichtung kann an dem von der Weichenzunge 3 entfernten Ende 41 angreifen, um den Kniehebel 39 und über die Ausnehmung 38 die Weichenzunge 3 zu schwenken. Darüberhinaus ist ein weiteres hinteres Ende 42 der Weichenzunge 3 über einen Führungsbolzen 43 in einem Langloch 44 geführt. Mit dem Führungsbolzen 43 kann ein Hebel für die Handbetätigung verbunden sein, um den Weichenmechanismus wahlweise von Hand oder automatisch schalten zu können. Eine Rastkugel 45, welche unter Federvorspannung in der Weichenzunge 3 aufgenommen ist, kann in einen Rastkörper 46 oder einen Drehkörper einrasten, um die Weichenzunge 3 lösbar, aber in definierten Stellungen festzuhalten.

Figur 16 zeigt eine zu der in Figur 15 dargestellten Weiche analoge Weiche für das Abbiegen nach rechts und die Geradeausfahrt. Es ist auch möglich, eine in Figur 15 gezeigte Weiche wie eine in Figur 16 gezeigte Weiche zu verwenden, das heißt, für die Geradeausfahrt und das Rechtsabbiegen zu verwenden. Dazu müssen nur die Brücken 12 gelöst werden und das Herzstück 47 der Weiche muß umgedreht werden. Darüberhinaus muß der nicht dargestellte Handhebel, welcher mit dem Führungsbolzen 43 verbunden ist, ummontiert werden, um von unten bedient werden zu können. Obgleich das Umwandeln einer in Figur 15 dargestellten Weiche in eine in Figur 16 dargestellte Weiche einen gewissen Montageaufwand erfordert, stellt dies dennoch eine relativ kostengünstige Variationsmöglichkeit dar und die Flexibilität des Baukastensystems wird weiter erhöht.

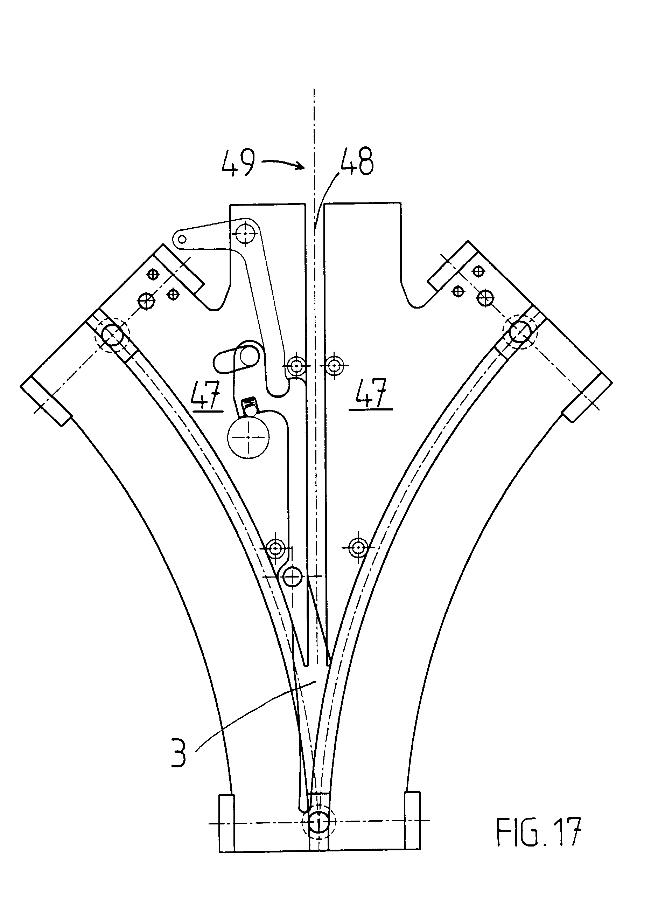

Figur 17 zeigt eine Weiche, bei welcher nur das Abbiegen nach links oder das Abbiegen nach rechts ermöglicht wird. Entsprechend ist die Weichenzunge 3 in ihrer Form umgestaltet. Der Schlitz 48 stellt keinen Führungsschlitz dar, sondern ergibt sich nur notgedrungen, weil die in Figur 17 gezeigte Doppel-Weiche aus den gleichen Herzstücken 47 zusammengesetzt ist, wie sie in den Figuren 15 und 16 gezeigt sind. Das Ende 49 der in Figur 17 dargestellten Weiche ist also ein blindes Ende.

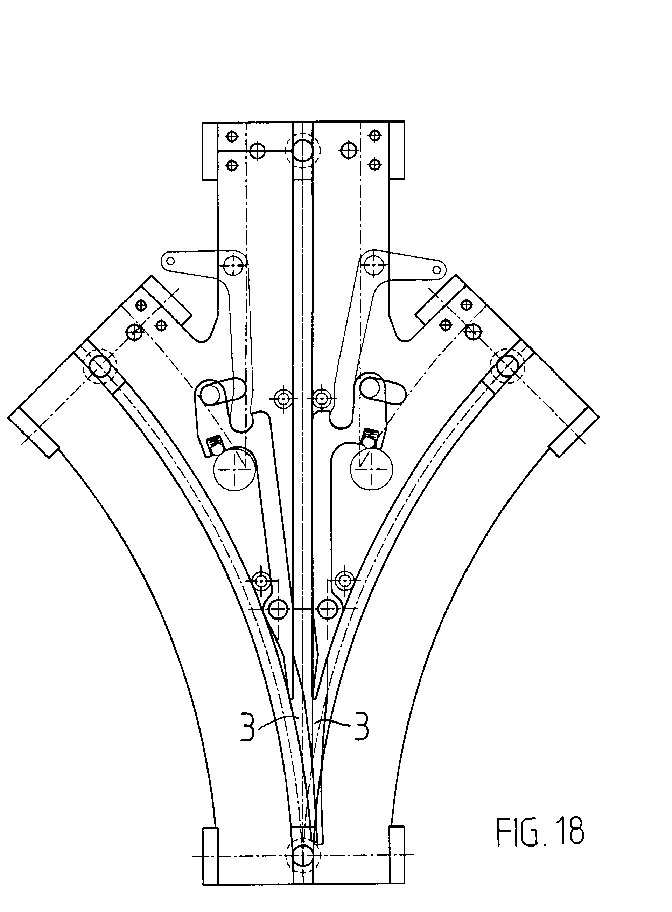

Figur 18 zeigt schließlich eine 3-Wege-Weiche, bei welcher Geradeausfahrt sowie ein Abbiegen um 45° nach links und ein Abbiegen um 45° nach rechts ermöglicht wird. Wie zu erkennen ist, sind zwei Weichenzungen 3 erforderlich, welche in einer gewissen Weise synchron zueinander bewegt werden müssen, um die jeweils gewünschten Weichenstellungen einzustellen.

Wie aus den Fig. 12 bis 18 ersichtlich, sind die Schienenabschnitte an den Enden ihrer Laufschienen stets mit einer Brücke 12 versehen, über welche die Tragprofilträger und die Laufprofilträger zusammengehalten sind und aneinander anschließende Schienenabschnitte miteinander verbunden werden.

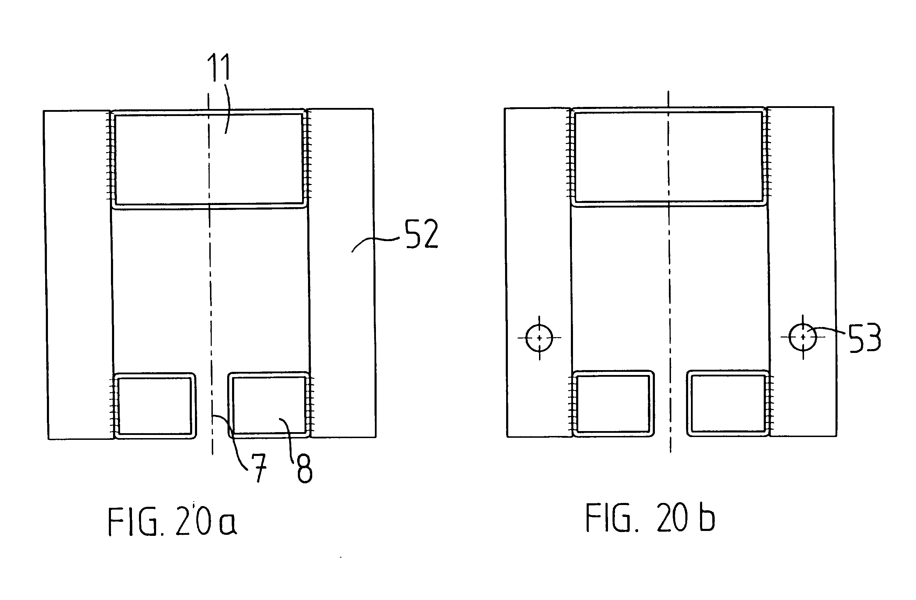

Ein weiteres, besonders kostengünstiges Ausführungsbeispiel für einen Strecken- oder Bogenabschnitt oder eine Kreuzungsweiche der Schiene in Endansicht in ist Fig. 20a und 20b gezeigt. Dieses Profil ist niedrig gestaltet und für den händischen Betrieb vorgesehen. Es ist nur ein einziger Tragprofilträger 11 vorgesehen, welches über angeschweißte Stege 52 mit den beiden ebenfalls an die Stege angeschweißten Laufprofilträgern 8 verbunden sind. Bei dem in Fig. 20b dargestellten Ausführungsbeispiel sind in den an den jeweiligen Enden der Schienenabschnitte angeordneten Stegen zusätzlich Verbindungs-Durchgangsbohrungen 53 vorgesehen, mittels welcher der jeweilige Schienenabschnitt mit einem benachbarten Schienenabschnitt verbunden werden kann. Die Schweißkonstruktion nach den Fig. 20a und 20b stellt eine besonders kostengünstige Variante dar, wobei nur darauf zu achten ist, daß kein solcher Schweißverzug auftritt, daß die Breite des Führungsschlitzes 7 übermäßig variiert.

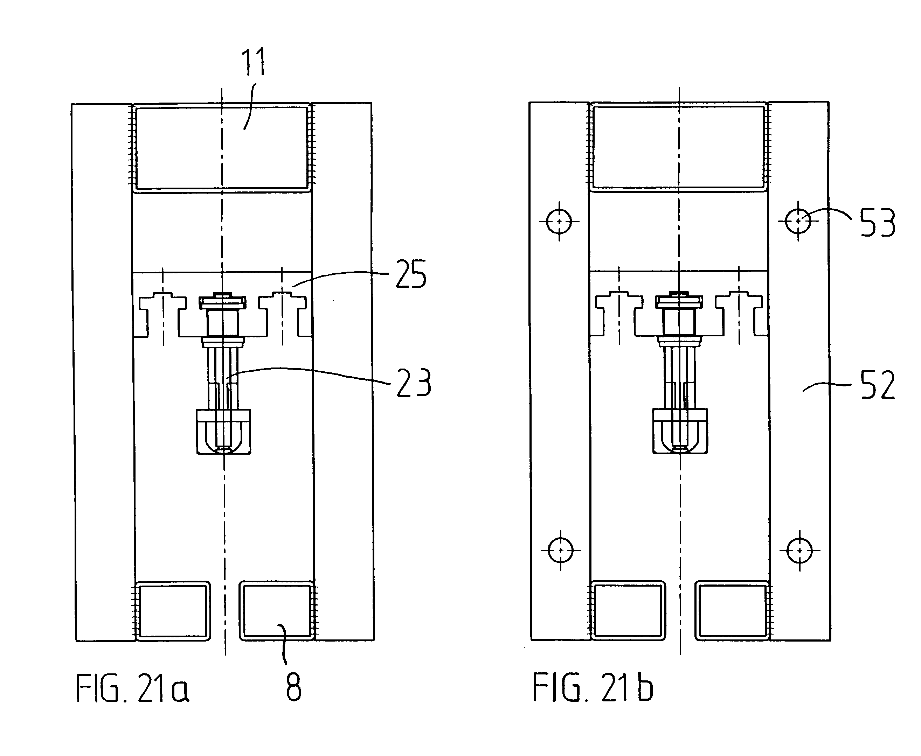

Fig. 21a und 21b zeigen den Fig. 20a und 20b entsprechende Darstellungen, wobei die Stege 52 länger gestaltet sind, um zwischen dem Tragprofilträger 11 und den Laufprofilträgern 8 Raum für einen automatischen Mitnehmer 23 zu lassen, welcher in der Kunststoffschiene 25 geführt ist. Zusätzlich ist eine weitere Verbindungs-Durchgangsbohrung 53 vorgesehen, so daß jeder der Stege 52 jeweils 2 Verbindungs-Durchgangsbohrungen 53 aufweist.

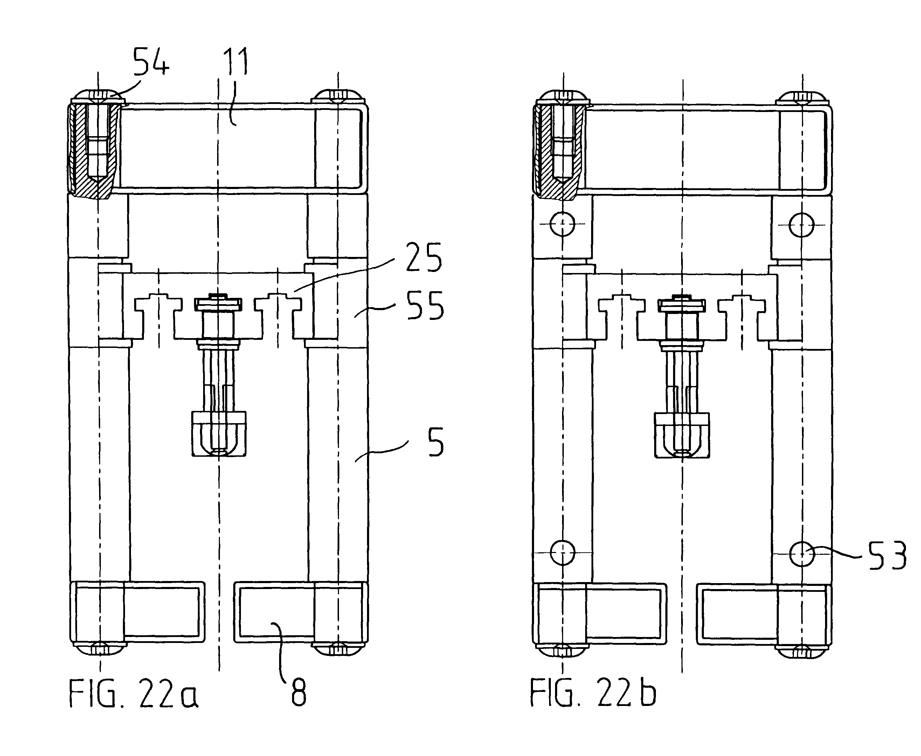

Eine der Konstruktion nach den Fig. 21a und 21b entsprechende Konstruktion ist in den Fig. 22a und 22b gezeigt, wobei die Stege 52 in Form von runden Metallstäben ausgebildet sind, welche mittels Schrauben 54 mit dem Tragprofilträger 11 und den Laufprofilträgern 8 verschraubt sind. Entsprechend können gemäß Fig. 22b Verbindungs-Durchgangsbohrungen 53 vorgesehen sein. Auf die Stäbe können darüber hinaus Kunststoffhalterungen 55 aufgeschnappt sein, welche die Kunststoffschienen 25 tragen. Die Konstruktion nach den Figuren 22a und 22b kann auch mit kürzeren Stegen und fehlendem Mitnehmer für den händischen Betrieb analog zu den in den Figuren 20a und 20b dargestellten Ausführungsformen ausgebildet sein.

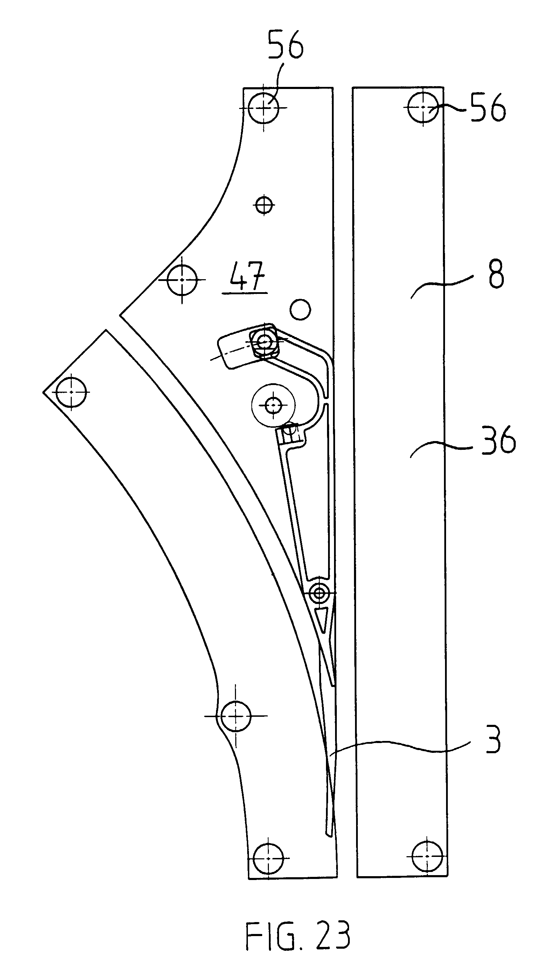

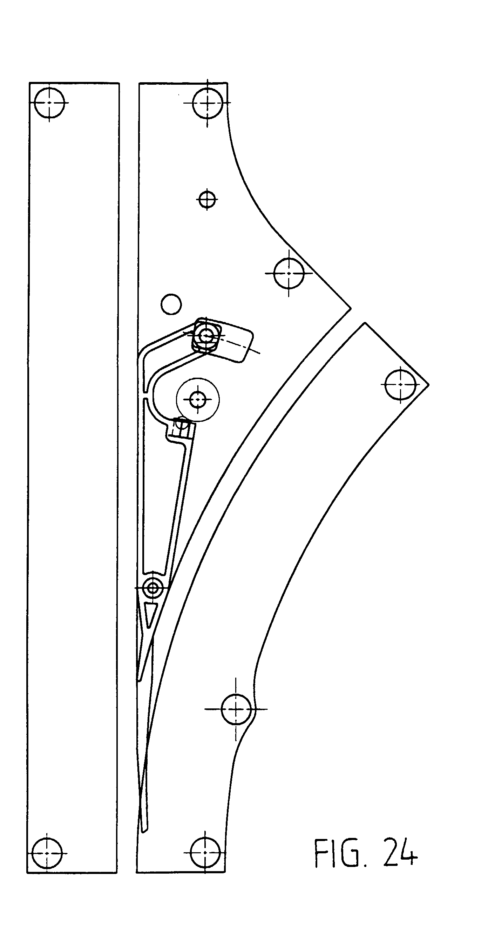

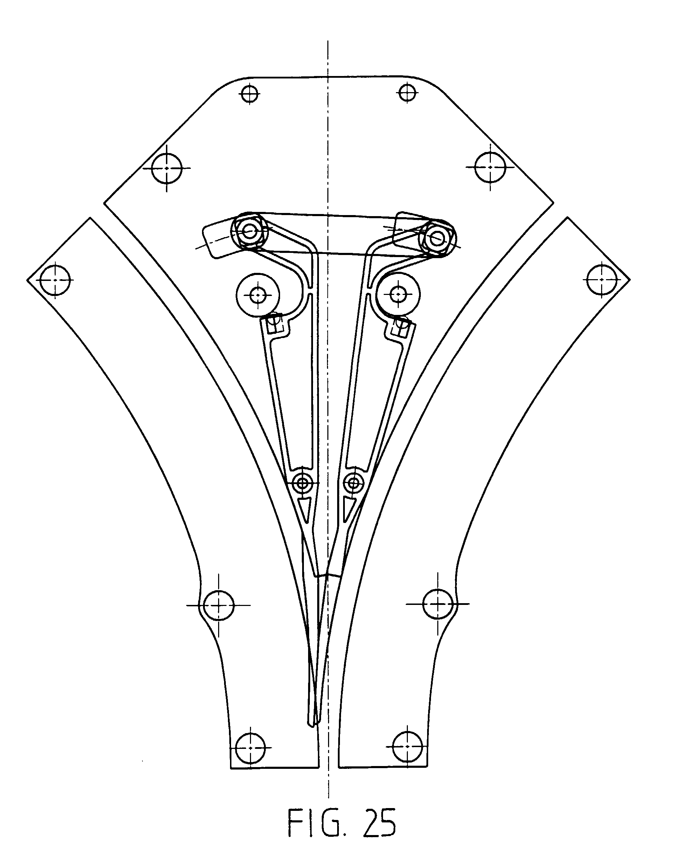

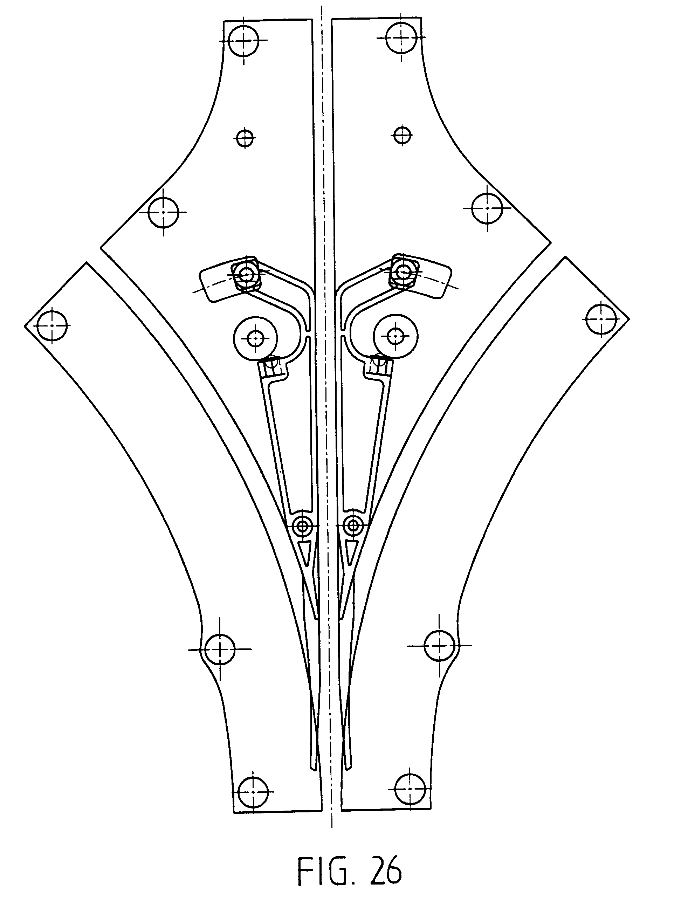

Beispiele für weitere Ausführungsformen verschiedener Weichen sind in den Figuren 23 bis 26 dargestellt, wobei hinsichtlich von deren Beschreibung im wesentlichen auf die Beschreibung zu den Figuren 15 bis 18 hingewiesen wird. Dargestellt ist wie in den Figuren 15 bis 18 ein unterer Teil der Weichen in der Draufsicht. Als wesentlicher Unterschied zu den Ausführungsformen nach Fig. 15 bis 18 entfällt bei den Ausführungsformen nach den Figuren 23 bis 26 der Kniehebel 39, weshalb die Weichenzungen 3 steht unmittelbar mittels des sich daran anschließeiiden Betätigungshebels betätigbar sind, um um die Lagerbolzen 36 geschwenkt werden zu können.

Die Herzstücke 47 und Laufprofilträger 8 gemäß der Ausführungsformen nach den Figuren 23 bis 26 sind über Bohrungen 56 mit den säulenförmigen Stegen (nicht dargestellt) verschraubt und diese ihrerseits mit ebenfalls nicht dargestellten Platten oder zwei parallel zueinander verlaufenden Platten verschraubt, wodurch die gesamten Weichenstücke zusammengehalten werden und wobei die vorgenannte Platte bzw. die parallel zueinander verlaufenden Platten die Tragprofilträger ersetzen.

## Patentansprüche

1. Hängeförderanlage mit einem aus einer Mehrzahl von Schienen zusammengesetzten Schienensystem und einem entlang diesem laufenden Rollapparat, wobei
die Schienen wenigstens zwei Laufprofilträger (8) aufweisen, welche jeweils mit einer oberen und einer unteren Lauffläche (9 bzw. 19) versehen sind;
die nebeneinander verlaufenden Laufprofilträger (8) mittels im Abstand voneinander angeordneter Stege (12,16) derart miteinander verbunden sind, daß zwischen den beiden Laufprofilträgern (8) ein Führungsschlitz (7) definierter Breite ausgebildet ist;
der Rollapparat (4) ein Fahrgestell mit zwei sich auf den oberen Laufflächen (9) der Laufprofilträger (8) abstützenden Tragrollen (5) mit gemeinsamer Laufachse aufweist;
der Rollapparat (4) unterhalb des Führungsschlitzes (7) mit einem Lastaufnahmemittel, insbesondere einem Lasthaken (17), am unteren Ende des Fahrgestells versehen ist;
der Rollapparat (4) nur eine Laufachse aufweist;
der Rollapparat (4) zwei in seiner Laufrichtung im Abstand voneinander angeordnete Seitenführungsrollen (6) aufweist, deren Achsen senkrecht zu der Achse der Tragrollen (5) verlaufen, und die Seitenführungsrollen (6) so zwischen den Tragrollen und den Stabilisierungsrollen (18) angeordnet sind, daß sie in dem Führungsschlitz (7) geführt laufen,
dadurch gekennzeichnet, daß
die Schienen wenigstens einen Tragprofilträger (11) aufweisen;
die Laufprofilträger im Querschnitt rechteckig sind;
der Tragprofilträger (11) und die nebeneinander verlaufenden Laufprofilträger (8) mittels im Abstand voneinander angeordneter Stege (12) miteinander verbunden sind;
unterhalb der Tragrollen (5) wenigstens zwei in Fahrtrichtung des Rollapparats im Abstand voneinander vor und hinter der Laufachse der Tragrollen angeordnete Stabilisierungsrollen (18) zum Untergreifen der Laufprofilträger (8) angeordnet sind, deren parallel zu der Achse der Tragrollen (5) verlaufen, wobei sich die Stabilisierungsrollen (18) an den unteren Laufflächen (19) abstützen;
der Rollapparat automatisch mittels eines an diesem angreifenden Mitnehmers (23) gefördert wird;
Weichen für einen Geradeauslauf oder eine Abzweigung des Rollapparates nach links oder nach rechts vorgesehen sind, wobei die Seitenführungsrollen (6) so zwischen den Tragrollen und den Stabilisierungsrollen (18) angeordnet sind, daß sie mit den Weichen zusammenwirken.

2. Hängeförderanlage nach Anspruch 1, dadurch gekennzeichnet, daß ein entlang der Laufprofilträger (8) des Schienensystems verlaufendes angetriebenes Fördermittel vorgesehen ist und Mitnehmer (23) aufweist, welche mit an der Oberseite des Fahrgestells der Rollapparate (4) angeordneten Mitnehmervorsprüngen (20) kuppelbar sind.

3. Hängeförderanlage nach Anspruch 1 oder 2, dadurch gekennzeichnet, daß die Tragrollen (5) und die Stabilisierungsrollen (18) vollständig innerhalb der Außenkontur des Fahrgestells (4) angeordnet sind.

4. Hängeförderanlage nach einem der Ansprüch 1 bis 3, dadurch gekennzeichnet, daß Weichenzungen (3) der Weichen in dem Führungsschlitz (7) an den Seitenführungsrollen (6) angreifen.

5. Hängeförderanlage nach Anspruch 4, dadurch gekennzeichnet, daß zueinander parallel verlaufende Weichenzungen (3) auf beiden Seiten des Führungsschlitzes (7) angeordnet sind und diese Weichenzungen (3) in den jeweiligen Laufprofilträgern (8) untergebracht sind.

6. Hängeförderanlage nach einem der Ansprüche 1 bis 5, dadurch gekennzeichnet, daß die Tragprofilträger (11) quadratische oder rechteckige Vierkantrohre sind, deren Außenflächen horizontal bzw. vertikal ausgerichtet sind.

7. Hängeförderanlage nach Anspruch 6, dadurch gekennzeichnet, daß die Tragprofilträger (11) einen höheren Querschnitt als die Laufprofilträger (8) aufweisen.

8. Hängeförderanlage nach einem der Ansprüche 1 bis 7, dadurch gekennzeichnet, daß das Schienensystem im Baukastensystem aus gesonderten Bogenabschnitten, Streckenabschnitten und Weichenabschnitten aufgebaut ist, wobei sich die Stege wenigstens an den Enden der Schienenabschnitte befinden und diese mittels der an den Enden befindlichen Stege miteinander verbunden sind.

9. Hängeförderanlage nach Anspruch 8, dadurch gekennzeichnet, daß sich das Schienensystem im wesentlichen zusammensetzt aus den Schienenabschnitten Bogenabschnitt, Streckenabschnitt, 2-Wege-Weiche gerade/45° links, 2-Wege-Weiche gerade/45° rechts, 2-Wege-Weiche 45° rechts/45° links, 3-Wege-Weiche gerade/45° rechts/45° links, und Kreuzungsweiche.

10. Hängeförderanlage nach einem der Ansprüche 4 bis 9, dadurch gekennzeichnet, daß die Weichen jeweils ein Herzstück (47) aufweisen, an welchem die jeweilige Weichenzunge (3) bzw. die jeweiligen Weichenzungen (3) schwenkbar gelagert sind.

11. Hängeförderanlage nach Anspruch 9 in Verbindung mit Anspruch 10, dadurch gekennzeichnet, daß die 2-Wege-Weiche gerade/45° links achsensymmetrisch zu der 2-Wege-Weiche gerade/45° rechts aufgebaut ist und das Herzstück (47) derart ausgebildet ist, daß dieses durch jeweiliges Herumdrehen wahlweise für die 2-Wege-Weiche gerade/45° links oder die 2-Wege-Weiche gerade/45° rechts verwendet werden kann.

12. Hängeförderanlage nach einem der vorangehenden Ansprüche, dadurch gekennzeichnet, daß die Tragrollen (5) einen größeren Durchmesser als die Stabilisierungsrollen (18) aufweisen.

13. Hängeförderanlage nach einem der vorangehenden Ansprüche, dadurch gekennzeichnet, daß das Lastaufnahmemittel ein schwenkbar an das Fahrgestell angelenkter Lasthaken (17) ist.

14. Hängeförderanlage nach einem der vorangehenden Ansprüche, dadurch gekennzeichnet, daß die Achsen der Tragrollen (5) und der Stabilisierungsrollen (18) jeweils durchgehend verlaufen und an dem Fahrgestell des Rollapparats (4) an drei Stellen abgestützt sind.

15. Hängeförderanlage nach einem der vorangehenden Ansprüche, dadurch gekennzeichnet, daß der Achsabstand der Seitenführungsrollen (6) größer als der Achsabstand der Stabilisierungsrollen (18) ist.

## Claims

1. Suspension conveyor system comprising a rail network composed of a plurality of rails, the suspension conveyor system further comprising a trolley travelling along the rail network, wherein
the rails comprise at least two sectional running girders (8) each provided with an upper and a lower running surface (9 and 19 respectively);
the sectional running girders (8) extending side by side are interconnected by means of strips (12, 16) spaced from each other such as to form a guide slit (7) having a defined width between the two sectional running girders (8);
the trolley (4) has a carriage comprising two bearing rollers (5) supported by the upper running surfaces (9) of the sectional running girders (8), the bearing rollers (5) having a common travelling axis;
the trolley (4) is equipped at the lower end of the carriage below the guide slit (7) with a load-carrying means, in particular with a load hook (17);
the trolley (4) has only one travelling axis;
the trolley (4) comprises two lateral guide rollers (6) spaced from each other in the travelling direction of the trolley (4), the axes of the lateral guide rollers (6) extending perpendicularly to the axis of the bearing rollers (5), and the lateral guide rollers (6) are arranged between the bearing rollers (5) and the stabilizing rollers (18) such that the lateral guide rollers (6) are guided in the guide slit (7),
characterized in that
the rails comprise at least one sectional support girder (11);
the sectional running girders (8) have a rectangular cross-section;
the sectional support girder (11) and the sectional running girders (8) extending side by side are interconnected by means of strips (12) spaced from each other;
below the bearing rollers (5), at least two stabilizing rollers (18) are arranged at a distance from each other in the travelling direction of the trolley behind and in front of the travelling axis of the bearing rollers, the stabilizing rollers (18) being arranged to engage from below the sectional running girders (8), the axes of the stabilizing rollers (18) extending parallel to the axis of the bearing rollers (5), wherein the stabilizing rollers (18) are supported by the lower running surfaces (19);
the trolley is automatically conveyed by means of a driver member (23) engaging said trolley;
switches are provided for a straight forward travel or a diversion of the trolley to the left or to the right, wherein the lateral guide rollers (6) are arranged between the bearing rollers and the stabilizing rollers (18) such as to cooperate with the switches.

2. Suspension conveyor system according to claim 1,
characterized in that a driven conveyor means is provided extending along the sectional running girders (8) of the rail network and comprising driver members (23) which can be coupled to drive-receiving projections (20) arranged on top of the carriage of each trolley (4).

3. Suspension conveyor system according to claim 1 or 2, characterized in that the bearing rollers (5) and the stabilizing rollers (18) are arranged completely within the outline of the carriage (4).

4. Suspension conveyor system according to one of claims 1 to 3, characterized in that switch blades (3) of the switches engage the lateral guide rollers (6) in the guide slit (7).

5. Suspension conveyor system according to claim 4,
characterized in that switch blades (3) extending parallel to each other are disposed on both sides of the guide slit (7), said switch blades (3) being accommodated in the respective sectional running girders (8).

6. Suspension conveyor system according to one of claims 1 to 5, characterized in that the sectional support girders (11) are tubes of square or rectangular cross-section, the exterior surfaces of the tubes being oriented horizontally and vertically, respectively.

7. Suspension conveyor system according to claim 6,
characterized in that the cross-section of the sectional support girders (11) is higher than the one of the sectional running girders (8).

8. Suspension conveyor system according to one of claims 1 to 7, characterized in that the rail network is composed of separate arcuate segments, straight segments and switch segments in a modular manner, and the strips are arranged at least at the ends of the rail segments, the rail segments being interconnected by means of the strips arranged at the ends thereof.

9. Suspension conveyor system according to claim 8,
characterized in that the rail network is essentially composed of the following types of rail segments: arcuate segment, straight segment, 2-way switch straight / 45° to the left, 2-way switch straight / 45° to the right, 2-way switch 45° to the right / 45° to the left, 3-way switch straight / 45° to the right / 45° to the left, and intersection switch.

10. Suspension conveyor system according to one of claims 4 to 9, characterized in that the switches each comprise a center piece (47), to which the associated switch blade (3) or switch blades (3), respectively are pivotably hinged.

11. Suspension conveyor system according to claim 9 in conjunction with claim 10, characterized in that the 2-way switch straight / 45° to the left is axially symmetric to the 2-way switch straight / 45° to the right, and the switch tongue (47) is provided such that it can be inverted to be used selectively for the 2-way switch straight / 45° to the left or the 2-way switch straight / 45° to the right.

12. Suspension conveyor system according to one of the preceding claims, characterized in that the diameter of the bearing rollers (5) exceeds the diameter of the stabilizing rollers (18).

13. Suspension conveyor system according to one of the preceding claims, characterized in that the load-carrying means is a load hook (17) pivotably hinged to the carriage.

14. Suspension conveyor system according to one of the preceding claims, characterized in that the axes of the bearing rollers (5) and of the stabilizing rollers (18) each extend continuously and are supported at three points of the carriage of the trolley (4).

15. Suspension conveyor system according to one of the preceding claims, characterized in that the distance between the axes of the lateral guide rollers (6) exceeds the distance between the axes of the stabilizing rollers (18).

## Revendications

1. Installation de transport suspendue, comprenant un ensemble à rails composé d'une pluralité de rails, et un appareil roulant circulant le long de cet ensemble, dans lequel :
- les rails comportent au moins deux poutres profilées de circulation (8), qui sont chacune pourvues de surfaces de circulation respectivement supérieure et inférieure (9,19) ;
- les poutres profilées de circulation (8) s'étendant l'une à côté de l'autre sont reliées mutuellement au moyen de traverses (12,16) espacées les unes des autres de telle sorte que, entre les deux poutres profilées de circulation (8), est formée une fente de guidage (7) de largeur définie ;
- l'appareil roulant (4) comprend un châssis comportant deux rouleaux de support (5) d'axe de circulation commun, s'appuyant sur les surfaces de circulation supérieures (9) des poutres profilées de circulation (8) ;
- l'appareil roulant (4) est pourvu, à l'extrémité inférieure du châssis, au-dessous de la fente de guidage (7), d'un moyen porte-charge, en particulier d'un crochet porte-charge (17) ;
- l'appareil roulant (4) présente seulement un axe de circulation ;
- l'appareil de roulement (4) comporte deux rouleaux de guidage latéral (6) disposés à distance l'un de l'autre selon sa direction de circulation, dont les axes s'étendent perpendiculairement à l'axe des rouleaux de support (5), et les rouleaux de guidage latéral (6) sont disposés entre les rouleaux de support et les rouleaux de stabilisation (18) de telle sorte qu'ils circulent en étant guidés dans la fente de guidage (7),
caractérisée en ce que :
- les rails comportent au moins une poutre profilée de support (11) ;
- les poutres profilées de circulation présentent une section transversale rectangulaire ;
- la poutre profilée de support (11) et les poutres profilées de circulation (8) s'étendant les unes à côté des autres sont reliées mutuellement au moyen de traverses (12) disposées à distance les unes des autres ;
- sous les rouleaux de support (5) sont disposés au moins deux rouleaux de stabilisation (18) destinés à entrer en contact avec le dessous des poutres profilées de circulation (8), qui sont placés dans la direction de déplacement de l'appareil roulant, devant et derrière l'axe de circulation des rouleaux de support et à distance l'un de l'autre, l'axe de ces rouleaux de stabilisation s'étendant de manière parallèle à l'axe des rouleaux de support (5), et les rouleaux de stabilisation (18) reposant sur les surfaces de circulation inférieures (19) ;
- l'appareil de roulement est transporté de manière automatique au moyen d'un élément d'entraînement (23) en prise avec celui-ci ;
- des aiguillages pour une trajectoire droite ou une dérivation de l'appareil roulant vers la gauche ou la droite sont prévus, les rouleaux de guidage latéral (6) étant disposés entre les rouleaux de support et les rouleaux de stabilisation (18) de telle sorte qu'ils coopèrent avec les aiguillages.

2. Installation de transport suspendue selon la revendication 1, caractérisée en ce qu'est prévu un élément de transport entraîné qui s'étend le long des poutres profilées de circulation (8) de l'ensemble à rails, et qui comporte des éléments d'entraînement (23) qui peuvent être accouplés avec des saillies d'entraînement (20) disposées sur le côté supérieur du châssis des appareils roulants (4).

3. Installation de transport suspendue selon la revendication 1 ou 2, caractérisée en ce que les rouleaux de support (5) et les rouleaux de stabilisation (18) sont entièrement disposés à l'intérieur du contour extérieur du châssis (4).

4. Installation de transport suspendue selon l'une des revendications 1 à 3, caractérisée en ce que des lames d'aiguillage (3) des aiguillages viennent en contact contre les rouleaux de guidage latéral (6) dans la fente de guidage (7).

5. Installation de transport suspendue selon la revendication 4, caractérisée en ce que des lames d'aiguillage (3) s'étendant parallèlement les unes aux autres sont disposées des deux côtés de la fente de guidage (7), et en ce que ces lames d'aiguillage (3) sont placées dans les poutres profilées de circulation (8) correspondantes.

6. Installation de transport suspendue selon l'une des revendications 1 à 5, caractérisée en ce que les poutres profilées de support (11) sont des tubes à quatre pans carrés ou rectangulaires, dont les surfaces extérieures ont des directions respectivement horizontale et verticale.

7. Installation de transport suspendue selon la revendication 6, caractérisée en ce que les poutres profilées de support (11) présentent une section transversale plus élevée que les poutres profilées de circulation (8).

8. Installation de transport suspendue selon l'un des revendications 1 à 7, caractérisée en ce que l'ensemble de rails, dans une construction modulaire, est construit à partir de sections courbes, droites et d'aiguillage individuelles, les traverses se trouvant au moins aux extrémités des sections de rail et celles-ci étant reliées mutuellement au moyen des traverses qui se trouvent aux extrémités.

9. Installation de transport suspendue selon la revendication 8, caractérisée en ce que l'ensemble de rails se compose sensiblement de sections de rails de section courbe, de section droite, d'aiguillages deux-voies tout droit-45° à gauche, d'aiguillages deux-voies tout droit/45° à droite, d'aiguillages deux-voies 45° à droite/45° à gauche, d'aiguillages trois-voies tout droit/45° à droite/45° à gauche, et d'aiguillages croisés.

10. Installation de transport suspendue selon l'une des revendications 4 à 9, caractérisée en ce que les aiguillages comprennent chacun une pièce de coeur (47) sur laquelle la lame correspondante d'aiguillage ou les lames correspondantes d'aiguillage (3) sont montées pivotantes.

11. Installation de transport suspendue selon la revendication 9 en combinaison avec la revendication 10, caractérisée en ce que l'aiguillage deux-voies tout droit/45° à gauche est construit par symétrie axiale avec l'aiguillage deux-voies tout droit/45° à droite, et en ce que la pièce de coeur (47) est réalisée de sorte qu'elle puisse être utilisée au choix, par pivotement correspondant, pour l'aiguillage deux-voies tout droit/45° à gauche ou l'aiguillage deux-voies tout droit/45° à droite.

12. Installation de transport suspendue selon l'une des revendications précédentes, caractérisée en ce que les rouleaux de support (5) présentent un diamètre plus important que les rouleaux de stabilisation (18).

13. Installation de transport suspendue selon l'une des revendications précédentes, caractérisée en ce que le moyen de suspension de charge est un crochet porte-charge (17) articulé de manière pivotante sur le châssis.

14. Installation de transport suspendue selon l'une des revendications précédentes, caractérisée en ce que les axes des rouleaux de support (5) et des rouleaux de stabilisation (18) s'étendent chacun de manière continue et s'appuient en trois endroits sur le châssis de l'appareil roulant (4).

15. Installation de transport suspendue selon l'une des revendications précédentes, caractérisée en ce que l'écartement entre les axes des rouleaux de guidage (6) est plus important que l'écartement entre les axes des rouleaux de stabilisation (18).
